# EUROPÄISCHE PATENTSCHRIFT

(11) **EP 2 052 993 B1**
(45) Veröffentlichungstag und Bekanntmachung des Hinweises auf die Patenterteilung: **22.06.2011**
(21) Anmeldenummer: 07118851.0
(22) Anmeldetag: 19.10.2007
(51) Int. Cl.: B65D 47/08, B65D 47/12, B65D 51/18

(54) **Verschluss**
Lock
Fermeture

(43) Veröffentlichungstag der Anmeldung: 29.04.2009
(73) Patentinhaber: Sika Technology AG, 6340 Baar (CH)
(72) Erfinder: Maiwald, Dana, 8006 Zürich (CH); Tobler, David, 8406 Winterthur (CH); Widmer, Andreas, 4600 Olten (CH); Dill, Fritz, 4900 Langenthal (CH)
(74) Vertreter: Sika Patent Attorneys

(56) Entgegenhaltungen:
- FR-A- 1 372 423
- FR-A- 2 866 819
- FR-A- 2 886 306
- GB-A- 1 571 662
- US-A- 3 708 083

## Beschreibung

### Technisches Gebiet

Die Erfindung bezieht sich auf einen Verschluss sowie auf eine Verpackung, bzw. Packung, mit einem derartigen Verschluss.

### Stand der Technik

Obwohl auch auf beliebige Verschlüsse anwendbar, werden die vorliegende Erfindung sowie die ihr zugrundeliegende Problematik nachfolgend mit Bezug auf einen Verschluss für einen mit einer Haftvermittlerzusammensetzung befüllten Behälter näher erläutert.

Haftvermittler sind solche Substanzen, welche die Haftung, insbesondere von Klebstoffen und Dichtstoffen, auf zu verklebenden, bzw. abzudichtenden, Oberflächen verbessern. Haftvermittler enthaltende Zusammensetzungen (Haftvermittlerzusammensetzungen) werden typischerweise von Herstellern der chemischen Industrie hergestellt und insbesondere an Kunden aus der Automobilindustrie, beispielsweise für die Verklebung von Windschutzscheiben, geliefert.

Damit ergeben sich im Wesentlichen zwei Anforderungen an einen derartigen Verschluss: Die erste Anforderung besteht darin, den mit einer Haftvermittlerzusammensetzung befüllten Behälter während eines Transports vom Hersteller zum Kunden und während einer Lagerung desselben abzudichten, d. h. ein Austreten von Haftvermittlerzusammensetzung aus dem Behälter zu verhindern. Während des Transports, bzw. der Lagerung, wird ein sogenannter Stapeldruck durch Stapeln mehrerer solcher Behälter übereinander auf weiter unten angeordnete Behälter ausgeübt. Ferner baut sich bei solchen Haftvermittlerzusammensetzungen, welche ein flüchtiges Lösungsmittel aufweisen, während des Transports, bzw. der Lagerung, über längere Zeit ein Gasdruck in dem Behälter auf. Sowohl der Stapeldruck als auch der Gasdruck sind vergleichsweise hoch, was bedingt, dass der Verschluss eine hohe Dichtwirkung aufweisen muss, um ein Austreten der Haftvermittlerzusammensetzung zu verhindern.

Die zweite Anforderung besteht darin, den Behälter zwischen Applikationen des Haftvermittlers beim Kunden abzudichten. Eine Applikation des Haftvermittlers beispielsweise auf einer Windschutzscheibe dauert wenige Sekunden. Anschließend wird der Behälter mit dem Haftvermittler abgestellt, bis wieder wenige Minuten später eine weitere Windschutzscheibe für eine Applikation der Haftvermittlerzusammensetzung bereit ist. Zwischen Applikationen soll der Verschluss vor allem ein Austreten der Haftvermittlerzusammensetzung bei einem versehentlichen Umstoßen des Behälters sowie einen Austritt von flüchtigem Lösungsmittel und ein Eindringen von Luftfeuchtigkeit verhindern.

Ein der Anmelderin bekannter Stand der Technik sieht einen Verschluss vor, welcher einen Napf und eine Schraubkappe aufweist. Der Napf wird in eine zu verschließende Öffnung eines tüllenförmigen Ausgießers eines Behälters eingesetzt, woraufhin die Schraubkappe auf ein Außengewinde des Ausgießers aufgeschraubt wird und dabei den Napf in die Öffnung presst, wodurch diese fluiddicht verschlossen wird.

Bei dem der Anmelderin bekannten Verschluss ist die Betätigung des Verschlusses vor der Applikation der Haftvermittlerzusammensetzung, also das Öffnen des Verschlusses, und nach der Applikation des Haftvermittlerzusammensetzung, also das Verschließen des Verschlusses, sehr umständlich, da zum einen das Aufschrauben, bzw. Abschrauben, der Drehkappe einen vergleichsweise großen Zeitaufwand bedeutet und zum anderen das Einsetzen, bzw. Herausnehmen, des Napfes einen weiteren vergleichsweise zeitaufwändigen Handhabungsschritt darstellt, wobei dieser eine beachtliche Koordination beider Hände des Benutzers erfordert.

Weitere Verschlüsse sind aus FR 2 866 819 bekannt.

### Darstellung der Erfindung

Es ist eine Aufgabe der vorliegenden Erfindung einen verbesserten Verschluss für einen Behälter bereitzustellen, wobei insbesondere eine vereinfachte Handbetätigung des Verschlusses zwischen Applikationen der Haftvermittlerzusammensetzung gegeben ist. Weiterhin ist es Aufgabe der vorliegenden Erfindung eine verbesserte Verpackung, bzw. Packung, mit einem derartigen Verschluss bereitzustellen.

Erfindungsgemäß wird wenigstens eine dieser Aufgaben durch einen Verschluss mit den Merkmalen des Patentanspruchs 1 und/oder durch eine Verpackung mit den Merkmalen des Patentanspruchs 25 und/oder Packung mit den Merkmalen des Patentanspruchs 26 gelöst.

Demgemäß wird ein Verschluss für einen Behälter zur Aufnahme eines Fluids, insbesondere einer Haftvermittlerzusammensetzung, bereitgestellt, mit einem Basiselement, welches im Bereich einer Ausgussöffnung des Behälters befestigbar ist und welches eine Öffnung aufweist, durch die hindurch das Fluid aus dem Behälter entnehmbar ist, mit einem ersten Verschlusselement, welches in einer Verschließstellung desselben die Öffnung des Basiselements fluiddicht verschließt und welches in einer Freigabestellung desselben die Öffnung des Basiselements freigibt, und mit einem an dem Basiselement wiederholt lösbar befestigbaren zweiten Verschlusselement, welches für einen Lagerzustand des Behälters das erste Verschlusselement in seiner Lagerstellung sichert und für einen Entnahmezustand des Behälters das erste Verschlusselement für ein Verbringen desselben aus seiner Verschließstellung in die Freigabestellung freigibt.

Weiterhin wird eine Verpackung mit einem Behälter, welcher eine Ausgussöffnung aufweist, und mit dem erfindungsgemäßen Verschluss, welcher im Bereich der Ausgussöffnung für ein Verschließen, bzw. Freigeben, derselben angebracht ist, bereitgestellt.

Schliesslich wird eine Packung bestehend aus einer erfindungsgemässen Verpackung und einem Fluid, insbesondere einer Haftvermittlerzusammensetzung, als Packgut bereitgestellt.

Die der vorliegenden Erfindung zugrundeliegende Idee besteht darin, ein erstes Verschlusselement vorzusehen, welches geeignet ist selbstständig, d.h. ohne die Unterstützung durch ein weiteres Verschlusselement, eine Ausgussöffnung des Behälters zu verschließen, bzw. freizugeben. Dabei ist das erste Verschlusselement geeignet die Ausgussöffnung des Behälters insbesondere zwischen Applikationen des Haftvermittlers zu verschließen. Das zweite Verschlusselement kann je nach Bedarf zur Sicherung des ersten Verschlusselements vorgesehen werden, wenn der Behälter gelagert, bzw. transportiert, insbesondere auch zwischen Applikationen des Haftvermittlers wieder gelagert, bzw. transportiert, werden soll.

Damit ergibt sich der Vorteil, dass eine Betätigung des zweiten Verschlusselements regelmäßig zwischen Applikationen des Haftvermittlers entfällt. Ein zeitaufwändiges Auf- und Abschrauben der Schraubkappe, wie im Stand der Technik, entfällt damit, was zu erheblichen Zeiteinsparungen führen kann.

In den Unteransprüchen finden sich vorteilhafte Ausgestaltungen, Verbesserungen und Weiterbildungen des in dem Patentanspruch 1 angegebenen Verschlusses und/oder der in dem Patenanspruch 25 angegebenen Verpackung und/oder der in dem Patenanspruch 26 angegebenen Packung.

Mit "fluiddicht" ist vorliegend gas- und flüssigkeitsdicht gemeint.

Unter einem "Verbringen" ist vorliegend ein rotatorisches und/oder translatorisches Bewegen zu verstehen.

Unter "wiederholt lösbar befestigbaren zweiten Verschlusselement" ist zu verstehen, dass das zweite Verschlusselement beliebig oft an dem Basiselement befestigt werden kann, bzw. von diesem auch wieder gelöst werden kann.

Mit "das erste Verschlusselement in seiner Verschließstellung sichert" ist gemeint, dass das zweite Verschlusselement für den Lagerzustand des Behälters eine Bewegung des ersten Verschlusselements relativ zu der Ausgussöffnung des Behälters verhindert.

Gemäß einer bevorzugten Ausgestaltung des erfindungsgemäßen Verschlusses weist das erste Verschlusselement eine erste Betätigungszeit für ein Verbringen desselben aus der Verschließstellung in die Freigabestellung und/oder umgekehrt auf und das zweite Verschlusselement weist eine zweite Betätigungszeit für ein Verbringen desselben aus seiner dem Lagerzustand des Behälters zugeordneten Stellung in seine dem Entnahmezustand des Behälters zugeordnete Stellung und/oder umgekehrt, auf, wobei die erste Betätigungszeit kürzer als die zweite Betätigungszeit vorgesehen ist. Mit "Betätigungszeit" ist vorliegend die Zeitdauer gemeint, die eine Person, also nicht eine Maschine, für das Verbringen der jeweiligen Verschlusselemente benötigt. Vorteilhaft ergibt sich gemäß dieser Ausgestaltung eine, insbesondere zwischen Applikationen der Haftvermittlerzusammensetzung, kürzere erste Betätigungszeit die relativ häufig anfällt, während die längere zweite Betätigungszeit vor und nach den Applikationen der Haftvermittlerzusammensetzung relativ selten anfällt. Damit ergibt sich eine insgesamt zeitsparende Bedienung des Verschlusses.

Bei einer weiter bevorzugten Weiterbildung des erfindungsgemäßen Verschlusses entfaltet das erste Verschlusselement in der Verschließstellung eine erste Dichtwirkung und das zweite Verschlusselement in seiner dem Lagerzustand des Behälters zugeordneten Stellung eine zweite Dichtwirkung, wobei die zweite Dichtwirkung größer als die erste Dichtwirkung vorgesehen ist. Das Sichern des ersten Verschlusselements mittels des zweiten

Verschlusselements führt dabei zu der zweiten Dichtwirkung. Unter "Dichtwirkung" ist vorliegend der Maximaldruck innerhalb des Behälters zu verstehen, bei welchem gerade noch keine Fluid aus diesem durch den Verschluss austritt. Damit ergibt sich der Vorteil, dass zwischen den Applikationen der Haftvermittlerzusammensetzung, wobei es lediglich ein Austreten der Haftvermittlerzusammensetzung durch beispielsweise ein Umkippen des Behälters sowie einen Austritt von flüchtigem Lösungsmittel (mit geringem Gasdruck) und ein Eindringen von Luftfeuchtigkeit zu verhindern gilt, entsprechend auch nur eine geringe Dichtwirkung mittels des ersten Verschlusselements bereitgestellt wird und vor und nach den Applikationen der Haftvermittlerzusammensetzung für eine Lagerung, bzw. einen Transport, des Behälters die benötigte große zweite Dichtwirkung mittels des zweiten Verschlusselements bereitgestellt wird.

Bei einer weiter bevorzugten Ausführungsform des erfindungsgemäßen Verschlusses ist die erste Betätigungszeit 1,5 - 10 x kürzer, bevorzugt 5 - 8 x kürzer als die zweite Betätigungszeit und/oder die zweite Dichtwirkung 1,5 - 1'000 x, bevorzugt 500 - 800 x, größer als die erste Dichtwirkung vorgesehen. Damit ergibt sich vorteilhaft ein erstes Verschlusselement mit einer sehr kurzen Betätigungszeit und einer geringen, aber ausreichenden Dichtwirkung und ein zweites Verschlusselement mit einer etwas längeren Betätigungszeit aber dafür sehr großen Dichtwirkung.

Gemäß einer weiter bevorzugten Weiterbildung des erfindungsgemäßen Verschlusses ist eine Schnappverbindung vorgesehen, mittels welcher das erste Verschlusselement und das Basiselement miteinander verbindbar sind und/oder eine Schraubverbindung vorgesehen, mittels welcher das zweite Verschlusselement und das Basiselement miteinander verbindbar sind. Eine derartige Schnappverbindung - damit ist vorliegend eine elastisch hintergreifende Verbindung gemeint - ist dazu geeignet die kurze erste Betätigungszeit bei der geringen, aber ausreichenden ersten Dichtwirkung und/oder eine Schraubverbindung ist dazu geeignet, die große zweite

Dichtwirkung bereit zu stellen bei der etwas längeren, zweiten Betätigungszeit bereitzustellen.

Bei einer weiter bevorzugten Ausgestaltung des erfindungsgemäßen Verschlusses bildet ein Ausgießer die Ausgussöffnung aus und das Basiselement ist an dem Ausgießer und/oder an einem an dem Ausgießer angebrachten Haltering befestigbar. Mit einem "Ausgießer" ist vorliegend insbesondere eine tüllenförmige Anformung an dem Behälter gemeint, welche in ihrem Endbereich die Ausgussöffnung ausbildet. Halteringe sind an sich allgemein bekannt und werden mit solchen Behältern verwendet, an denen sich ein Gewinde oder auch andere Befestigungsmöglichkeiten für das Basiselement nicht oder nur schwer anformen lassen - beispielweise bei einem Behälter aus dünnem Aluminium. Solche Halteringe werden beispielsweise auf den Ausgießer aufgeschoben, woraufhin dieser in seinem Endbereich zum Fixieren des Halterings umgebördelt wird. Ausgießer sind für eine gezielte Applikation, beispielsweise der Haftvermittlerzusammensetzung, vorteilhaft. Selbstverständlich ist es genauso möglich das Basiselement direkt an dem Ausgießer zu befestigen, beispielsweise bei Behältern aus Kunststoff, welcher einfach mit einer geeigneten Befestigungsmöglichkeit, beispielsweise in Form eines Gewindes zur Befestigung des Basiselements, ausgebildet werden kann.

Bei einer weiter bevorzugten Ausführungsform des erfindungsgemäßen Verschlusses weist das Basiselement einen Befestigungsabschnitt für ein Befestigen des ersten Verschlusselements in der Verschließstellung auf. Wenn auch ein derartiger Befestigungsabschnitt anderweitig vorgesehen sein kann, so ist es doch konstruktionstechnisch sehr einfach einen solchen an dem Basiselement vorzusehen. Dabei ist eine form- und/oder reibschlüssige lösbare Befestigung des ersten Verschlusselements an dem Basiselement mittels des Befestigungsabschnitts zu bevorzugen.

Gemäß einer weiter bevorzugten Weiterbildung des erfindungsgemäßen Verschlusses weist das erste Verschlusselement eine Dichtlippe auf, wobei die Dichtlippe in der Verschließstellung des ersten Verschlusselements fluiddicht gegen den Befestigungsabschnitt anliegt. Damit wird das Verschließen der Öffnung des Basiselements auf sehr einfache Weise erreicht. Dabei kann die Dichtlippe zusätzlich zum Abdichten der Öffnung auch zur Befestigung an dem Befestigungsabschnitt, insbesondere mittels Form- und/oder Reibschluss, dienen.

Weiterhin bevorzugt weist der erste Befestigungsabschnitt eine Dichtnut und die Dichtlippe des ersten Verschlusselements eine Dichtwulst auf, wobei die Dichtwulst in der Verschließstellung des ersten Verschlusselements in die Dichtnut lösbar elastisch eingreift. Damit wird sowohl das fluiddichte Abdichten der Öffnung des Basiselements als auch die Befestigung des ersten Verschlusselements an dem Basiselement auf mechanisch einfache Weise erreicht. Darüber hinaus kann das lösbar elastische Eingreifen der Dichtwulst in die Dichtnut dem Benutzer eine akustische Rückmeldung geben, dass der Behälter mittels des ersten Verschlusselements verschlossen ist.

Bei einer weiter bevorzugten Ausführungsform des erfindungsgemäßen Verschlusses weist das Basiselement einen Klemmabschnitt auf, welcher in dem Lagerzustand des Behälters zum Sichern des ersten Verschlusselements in seiner Verschließstellung einen Ringbereich des ersten Verschlusselements zwischen sich und dem zweiten Verschlusselement fluiddicht klemmt. Auf diese Weise kann eine Bewegung des ersten Verschlusselements bezüglich des Behälters verhindert werden. Dies führt dann dazu, dass selbst bei einem Druck innerhalb des Behälters, welcher die Dichtwirkung des ersten Verschlusselements an sich übersteigt, dieses weiterhin in seiner die Öffnung des Basiselements verschließenden Verschließstellung verbleibt, da eine Relativbewegung, wie oberhalb beschrieben, mittels Wirkung des zweiten Verschlusselements auf das erste Verschlusselement verhindert wird.

Bevorzugt weist der Klemmabschnitt wenigstens eine Dichtwulst auf. Diese Dichtwulst ist in dem Lagerzustand des Behälters zwischen dem ersten Verschlusselement und dem Ringbereich angeordnet. Klemmen der Ringbereich und das zweite Verschlusselement nun das erste Verschlusselement in dem Lagerzustand des Behälters zwischen sich, so wird die zweite Dichtwirkung noch weiter erhöht.

Gemäß einer weiter bevorzugten Weiterbildung des erfindungsgemäßen Verschlusses weist das Basiselement einen Aufnahmeabschnitt auf, innerhalb welchem der Ausgießer des Behälters für ein Befestigen des Basiselements an dem Behälter aufnehmbar ist, wobei der Aufnahmeabschnitt des Basiselements vorzugsweise ein Innengewinde zum Aufschrauben des Basiselements auf den Behälter, insbesondere auf den Haltering, und/oder vorzugsweise ein Außengewinde zum Aufschrauben des zweiten Verschlusselements auf das Basiselement aufweist. Damit kommt dem Aufnahmeabschnitt eine Doppelfunktion zu: Zum einen dient er der Befestigung des Basiselements an dem Behälter, zum anderen kann das zweite Verschlusselement an ihm befestigt werden.

Bei einer weiter bevorzugten Weiterbildung des Verschlusses schließt sich der Klemmabschnitt, insbesondere rechtwinklig, abgewinkelt an den Aufnahmeabschnitt an und/oder schließt sich der Befestigungsabschnitt, insbesondere rechtwinklig, abgewinkelt für ein Eingreifen in den Ausgießer an dem Klemmabschnitt abgewinkelt an. Ist das Basiselement an dem Ausgießer des Behälters befestigt, so umgreift der Aufnahmeabschnitt den Ausgießer außenseitig, während der Klemmabschnitt im Wesentlichen parallel zur Stirnseite des Ausgießers angeordnet ist und sich der Befestigungsabschnitt in den Ausgießer hinein erstreckt.

Bei einer weiter bevorzugten Weiterbildung des erfindungsgemäßen Verschlusses weist das Basiselement ein Schalenelement mit wenigsten einem Loch, vorzugsweise mit 6 - 12 Löchern, auf, welches behälterseitig bezüglich der Öffnung des Basiselements angeordnet ist und sich von dieser wegwölbt, wobei mittels des wenigstens einen Lochs das Fluids der Öffnung zuführbar ist. Ein derartiges Schalenelement erlaubt eine bessere Dosierung und genauere Applikation des Fluids, bzw. der Haftvermittlerzusammensetzung. Auch kann somit überschüssiges Fluid beim Aufstellen des Behälters wieder leichter zurück in den Behälter fließen.

Gemäß einer weiter bevorzugten Weiterbildung des erfindungsgemäßen Verschlusses ist das Schalenelement in seinem Randbereich mit dem Befestigungsabschnitt verbunden. Damit bildet der Befestigungsabschnitt zusammen mit dem Schalenelement eine Vertiefung aus, in welcher die Dichtlippe des ersten Verschlusselements aufnehmbar ist.

Gemäß einer weiter bevorzugten Ausgestaltung des erfindungsgemäßen Verschlusses weist das Basiselement einen Ringabschnitt mit Dichtmitteln, insbesondere Dichtlamellen, für ein Eingreifen in den Ausgießer auf, um einen Spalt zwischen dem Befestigungsabschnitt und dem Ausgießer abzudichten, wobei der Ringabschnitt vorzugsweise nach innen versetzt zu dem Befestigungsabschnitt ausgebildet und/oder vorzugsweise an dem Schalenelement angeformt ist. Den Ringabschnitt nach innen versetzt bezüglich des Befestigungsabschnitts vorzusehen, hat den Vorteil, dass somit ausreichend Platz für das Vorsehen der Dichtlamellen zur Verfügung steht. Ein Anformen des Ringabschnitts an dem Schalenelements ist fertigungstechnisch einfach zu erreichen.

Bei einer weiter bevorzugten Ausführungsform des erfindungsgemäßen Verschlusses weist das Basiselement wenigstens einen sich an den Aufnahmeabschnitt anschließenden Kragen auf, welcher mit wenigstens einer Haltenocke für einen Eingriff in wenigstens eine Ausnehmungen eines Garantiebands des zweiten Verschlusselements versehen ist. Unter einem "Garantieband" ist vorliegend ein Mittel zu verstehen, welches an dem zweiten Verschlusselement befestigt ist und von diesem getrennt werden muss, um das zweite Verschlusselement aus seiner dem Lagerzustand des Behälters zugeordneten Stellung in seine dem Entnahmezustand des Behälters zugeordneten Stellung zu verbringen. Das Garantieband kann aber danach nicht mehr mit dem zweiten Verschlusselement verbunden werden und zeigt somit an, ob das zweite Verschlusselement bereits zuvor zwischen diesen Stellungen verbracht worden ist und somit die Möglichkeit besteht, dass bereits Fluid aus dem Behälter entnommen worden ist.

Das Garantieband ist vorzugsweise drehfest mit dem zweiten Verschlusselement verbunden. Die Ausnehmungen in dem Garantieband, welche mit der wenigstens einen Haltenocke des Basiselements im Eingriff stehen, verhindern dabei eine Drehung des zweiten Verschlusselements relativ zu dem Basiselement und damit ein Verbringen des zweiten Verschlusselements zwischen seinen beiden Stellungen, solange bis das Garantieband von dem zweiten Verschlusselement abgerissen wird.

Bei einer weiter bevorzugten Ausgestaltung des erfindungsgemäßen Verschlusses weist das Basiselement einen sich an den Aufnahmeabschnitt anschließenden Kragen auf, welcher mit wenigstens einem Rastfenster für einen lösbaren Eingriff mit wenigstens einem Rasthaken des Ausgießers, insbesondere mit einem Rasthaken des an dem Ausgießer angebrachten Halterings, versehen ist. Somit lässt sich das Basiselement auf einfache Weise rotationsfest mit dem Behälter verbinden. Wird das Basiselement auf den Ausgießer aufgeschraubt und auf diese Weise rotationsfest mit diesem verbunden, so ist eine Relativbewegung des Basiselements relativ zu dem Ausgießer ausgeschlossen.

Beim erfindungsgemäßen Verschluss ist das erste Verschlusselement an dem Basiselement zwischen seiner Verschließstellung und seiner Freigabestellung um eine Schwenkachse verschwenkbar gelagert. Damit ergibt sich der Vorteil, dass das erste Verschlusselement kein separates Teil darstellt, welches leicht verloren gehen kann, sondern mit dem Basiselement verbunden ist, jedoch weiterhin die Verbringung des ersten Verschlusselements zwischen seiner Verschließstellung und seiner Freigabestellung ermöglich ist. Benutzer sind damit auch eher geneigt, das erste Verschlusselement zu verschließen, da sie griffbereit zur Verfügung steht.

Beim erfindungsgemäßen Verschluss ist die Schwenkachse an einem Kragen des Basiselements, welcher sich an den Aufnahmeabschnitt anschließt, ausgebildet und ein insbesondere z-förmiger Hebel verbindet die Schwenkachse mit dem ersten Verschlusselement in einem Anbindungsbereich desselben. Mit einem "z-förmigen" Hebel ist ein Hebel mit zwei im Wesentlichen zueinander parallelen Abschnitten und einem sich zwischen und im Wesentlichen rechtwinklig zu diesen erstreckenden und diese an ihren Enden verbindenden Abschnitt gemeint, so dass sich im Wesentlichen eine z-Form der Abschnitte zueinander ergibt. Damit ergibt sich vorteilhaft, dass das erste Verschlusselement in der Freigabestellung, in welcher es von der Öffnung des Basiselements wegverschwenkt angeordnet ist, einen großen Abstand bezüglich desselben aufweist, bzw. ein Verschwenken des ersten Verschlusselements über einen vergleichsweise großen Winkel hinweg gegeben ist, so dass das erste Verschlusselement, beispielsweise bei einer Applikation des Fluids, insbesondere der Haftvermittlerzusammensetzung, nicht störend wirkt, bzw. im Weg ist.

Gemäß einer weiter bevorzugten Ausgestaltung des erfindungsgemäßen Verschlusses weist das Basiselement eine Ausnehmung auf, in welcher der Hebel in der Verschließstellung des ersten Verschlusselements versenkt angeordnet ist. Diese Ausgestaltung erlaubt vorteilhaft, das zweite Verschlusselement an dem Basiselement zu befestigen, ohne dass es zu einer Kollision mit dem ersten Verschlusselement kommt.

Gemäß einer weiter bevorzugten Ausgestaltung des Verschlusses weist das erste Verschlusselement insbesondere gegenüber seinem Anbindungsbereich an dem Hebel eine Betätigungslasche zum Untergreifen für eine Ein-HandBetätigung des Verschlusselements für ein Verbringen desselben aus der Verschließstellung in die Freigabestellung auf. Damit ergibt sich eine sehr einfache Handhabung des Verschlusses mittels einer Hand, wobei die andere Hand für anderweitige Tätigkeiten zur Verfügung steht.

Bei einer weiter bevorzugten Weiterbildung des erfindungsgemäßen Verschlusses sind das Basiselement und/oder der Hebel und/oder das erste Verschlusselement einstückig ausgebildet. Damit ergibt sich eine sehr vereinfachte Herstellung des Verschlusses. Insbesondere in dem Fall, dass das Basiselement, der Hebel und die Schwenkachse einstückig aus einem Kunststoff ausgebildet sind, kann die Schwenkachse beispielsweise mittels eines verjüngten und damit flexiblen Bereichs ausgebildet werden, der als Scharnier zwischen dem Hebel und dem Basiselement und/oder zwischen dem Hebel und dem ersten Verschlusselement wirkt.

Gemäß einer weiter bevorzugten Weiterbildung des Verschlusses ist das zweite Verschlusselement gegenüber dem Basiselement insbesondere mittels einer Schraubverbindung in dem Lagerzustand verspannt, wobei das zweite Verschlusselement das erste Verschlusselement für das Sichern desselben in der Verschließstellung gegen das Basiselement presst. Somit wird auf einfache Weise die zweite Dichtwirkung erzielt, wobei gleichzeitig die Schraubverbindung eine wiederholt lösbare Befestigung des zweiten Verschlusselements an dem Basiselement darstellt.

Gemäß einer weiter bevorzugten Ausgestaltung des Verschlusses weist das zweite Verschlusselement einen Ringabschnitt, mit einem Innengewinde, auf. Damit lässt sich das zweite Verschlusselement einfach auf ein an dem Basiselement vorgesehenes Außengewinde zum Erzielen der vorstehend beschriebenen Schraubverbindung aufschrauben.

Gemäß einer weiter bevorzugten Ausgestaltung des Verschlusses weist das zweite Verschlusselement ein an dem Ringabschnitt befestigtes Garantieband auf. Damit wird eine räumlich benachbarte Anordnung des Garantiebands zu dem Kragen des Basiselements geschaffen, wodurch die vorstehend beschriebenen Rasthaken einfach in die Ausnehmung des Garantiebands eingreifen können, um somit das zweite Verschlusselement rotationsfest relativ zu dem Basiselement zu befestigen. Ist das zweite Verschlusselement auf das Basiselement aufgeschraubt und mittels des Garantiebands rotationsgesichert, kann ein Lösen des zweiten Verschlusselements ohne vorhergehendes Entfernen des Garantiebands verhindert werden.

Die Verpackung, welche einen Behälter, welcher eine Ausgussöffnung aufweist, und einen erfindungsgemäßen Verschluss, welcher im Bereich der Ausgussöffnung für ein Verschließen, bzw. Freigeben, derselben angebracht ist, aufweist, eignet sich für das Verpacken eines Fluids, insbesondere einer Haftvermittlerzusammensetzung. Derartige Verpackungen sind für derartige Substanzen besonders zweckmäßig, da sie die Anforderungen, welche sich beim Transport, bzw. Lagerung, und bei der Applikation derartiger Substanzen ergeben, erfüllen.

Die erfindungsgemäße Packung besteht aus einer beschriebenen Verpackung und einem Fluid als Packgut. Als Fluid ist insbesondere eine Haftvermittlerzusammensetzung bevorzugt.

Die Haftvermittlerzusammensetzung enthält mindestens eine haftvermittelnde Substanz, im Folgenden auch Haftvermittler genannt. Vorzugsweise ist der Haftvermittler ausgewählt aus der Gruppe bestehend aus Organo-Siliziumverbindungen, Organo-Titanverbindungen, Organo-Zirkoniumverbindungen, Polyisocyanate, Isocyanat aufweisende Polymere und Mischungen daraus.

Mit "Poly" beginnende Substanznamen wie beispielsweise Polyisocyanat, Polyurethan, Polyol, Polyamin, Polysulfid, bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Die Organo-Siliziumverbindung weist hierbei mindestens eine an ein Siliziumatom gebundene Hydroxygruppe, Alkoxygruppe oder Acyloxygruppe sowie mindestens einen über eine Kohlenstoff-Silizium-Bindung an ein Siliziumatom gebundenen organischen Substituenten auf. Die Organo-Titanverbindung weist hierbei mindestens einen über eine Sauerstoff-Titan-Bindung an das Titanatom gebundenen Substituenten auf. Die Organo-Zirkoniumverbindung weist hierbei mindestens einen über eine Sauerstoff-Zirkonium-Bindung an das Zirkoniumatom gebundenen Substituenten auf.

Als Organo-Siliziumverbindungen sind besonders geeignet Organo-Siliziumverbindungen der Formeln (I) oder (II) oder (III) oder (IV). 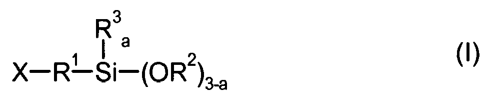 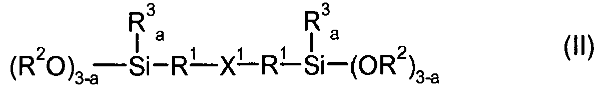 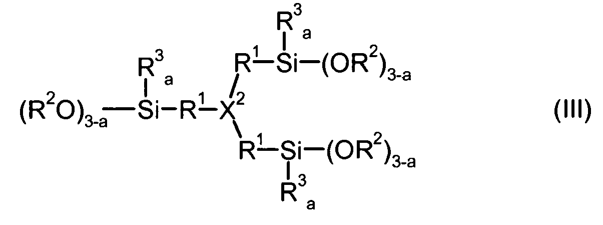 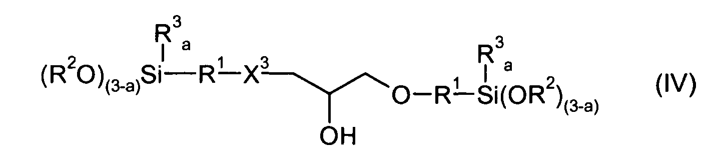 R¹ steht hierbei für eine lineare oder verzweigte, gegebenenfalls cyclische, Alkylengruppe mit 1 bis 20 C-Atomen, gegebenenfalls mit aromatischen Anteilen, und welche gegebenenfalls ein oder mehreren Heteroatome, insbesondere Stickstoffatome, aufweist.
R² steht hierbei für H oder für eine Alkylgruppe mit 1 bis 5 C-Atomen, insbesondere für Methyl oder Ethyl oder eine Acylgruppe, insbesondere für Acetyl, bevorzugt für Methyl.
R³ steht hierbei für eine Alkylgruppe mit 1 bis 8 C-Atomen, insbesondere Methyl.
X steht hierbei für H, oder für eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 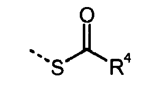 verstanden wird, wobei R⁴ für Alkyl, insbesondere mit 1 bis 20 Kohlenstoffatomen, steht und die gestrichelte Linie die Bindung zum Substituent R¹ darstellt.
X¹ steht hierbei für eine funktionelle Gruppe, welche ausgewählt ist aus der Gruppe umfassend NH, S, S₂ und S₄.
X² steht hierbei für eine funktionelle Gruppe, welche ausgewählt ist aus der Gruppe umfassend N und Isocyanurat.
X³ steht hierbei für eine funktionelle Gruppe, welche ausgewählt ist aus der Gruppe bestehend aus S und NR⁵, wobei R⁵ für H, Alkyl, Cycloalkyl, Aryl oder für denRest der Formel -Si(R³)ₐ(OR²)₍₃₋ₐ₎ steht. Bevorzugt weisen diese Alkyl-, Cycloalkyl- oder Arylreste R⁵ 1 bis 10 C-Atome auf. a steht hierbei für einen der Werte 0, 1 oder 2, bevorzugt 0. Der Substituent R¹ steht insbesondere für eine Methylen-, Propylen-, Methylpropylen-, Butylen- oder Dimethylbutylengruppe. Als besonders bevorzugt wird Propylengruppe als Substituent R¹ verwendet.

Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxa-heptyldimethoxymethylsilan, N-(Methyl)-3-aminopropyltrimethoxysilan, N-(n-butyl)-3-aminopropyltrimethoxysilan; 3-Mercaptopropyltriethoxysilan, 3-Mercaptopropyltrimethoxysilan, 3-Mercaptopropyl-methyldimethoxysilan; 3-Acylthiopropyltrimethoxysilan; Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenigen, welche einen an das Siliziumatom gebundenen organischen Substituenten aufweisen, welcher zusätzlich noch eine funktionelle Gruppe aufweist, das heisst, welcher keine Alkylgruppe ist, und einer Formel (I) entspricht, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1H,3H,5H)-trionharnstoff (=Tris(3-(trimethoxysilyl)propyl)isocyanurat) und 1,3,5-tris[3-(triethoxysilyl)propyl]-1,3,5-triazine-2,4,6(1 H,3H,5H)-trion-harnstoff (=Tris(3-(triethoxysilyl)propyl)isocyanurat).

Als Organo-Siliziumverbindungen der Formel (IV) eignen sich insbesondere die Reaktionsprodukte von 3-Mercaptopropyltrimethoxysilan oder 3-Aminopropyltrimethoxysilan oder Bis-[3-(trimethoxysilyl)-propyl]-amin mit 3-Glycidyloxypropyltrimethoxysilan. Bevorzugt eignen sich die Reaktionsprodukte von 3-Aminopropyltrimethoxysilan und 3-Glycidyloxypropyltrimethoxysilan. Unter Organo-Siliziumverbindungen der Formel (IV) sind auch intramolekulare zyklische Umesterungsprodukte zu verstehen.

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Als über eine Sauerstoff-Titan-Bindung an das Titanatom gebundene Substituenten sind besonders geeignete Substituenten diejenigen, welche aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere so genannte Neoalkoxy-Substituenten, insbesondere der folgenden Formel (V), als besonders geeignet erwiesen.

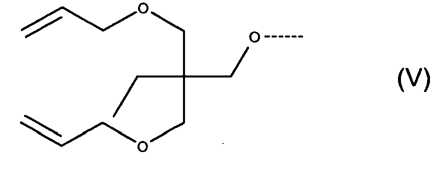

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der folgenden Formel (VI).

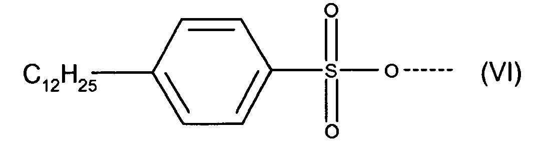

Besonders geeignet als Carboxylatgruppen haben sich insbesondere Carboxylate von Fettsäuren erwiesen. Als bevorzugtes Carboxylat gilt Decanoat.

In den obigen Formeln stellt die gestrichelte Linie die Bindung des Sauerstoffs zum Titan dar.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-1 05, TE, ETAM, OGT von DuPont.
Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.
Besonders bevorzugt werden Organo-Titanverbindungen, welche, über eine Sauerstoff-Titan-Bindung, an das Titanatom gebundene Substituenten der Formeln (V) und/oder (VI) enthalten.

Als Organo-Zirkoniumverbindungen sind insbesondere solche geeignet, welche mindestens eine funktionelle Gruppe tragen, welche ausgewählt ist aus der Gruppe umfassend Alkoxygruppe, Sulfonatgruppe, Carboxylatgruppe, Phosphat oder Mischungen davon, und welche über ein Sauerstoff-Zirkonium-Bindung direkt an ein Zirkoniumatom gebunden ist.

Als Alkoxygruppen haben sich insbesondere Isopropoxy- und so genannte Neoalkoxy-Substituenten, insbesondere der Formel (V), besonders geeignet erwiesen. 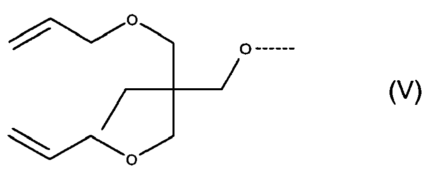 Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der Formel (VI). 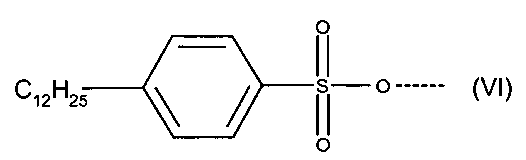 Als Carboxylatgruppen haben sich insbesondere Carboxylate von Fettsäuren besonders geeignet erwiesen. Als bevorzugte Carboxylate gelten Stearate und Isostearate. In den obigen Formeln stellt die gestrichelte Linie die Bindung des Sauerstoffs zum Zirkonium dar.

Organo-Zirkoniumverbindungen sind kommerziell erhältlich, beispielsweise bei der Firma Kenrich Petrochemicals. Geeignete Organo-Zirkoniumverbindungen sind beispielsweise Ken-React® NZ 38J, NZ TPPJ, KZ OPPR, KZ TPP, NZ 01, NZ 09, NZ 12, NZ38, NZ 44, NZ 97.

Es ist dem Fachmann klar, dass diese Organo-Siliziumverbindungen, Organo-Titanverbindungen und Organo-Zirkoniumverbindungen unter dem Einfluss von Wasser hydrolysieren und an das Si-, Ti- oder Zr-Atom gebundene OH-Gruppen bilden. Derartige hydrolysierte, beziehungsweise teilhydrolysierte, Organo-Siliziumverbindungen, Organo-Titanverbindungen und Organo-Zirkoniumverbindungen können dann ihrerseits kondensieren und Kondensationsprodukte bilden, welche Si-O-Si, Ti-O-Ti, Zr-O-Zr Bindungen aufweisen. Sind Silane und/oder Titanate und/oder Zirkonate als Haftvermittler gemischt, sind auch gemischte Kondensationsprodukte möglich, welche Si-O-Ti, Si-O-Zr oder Ti-O-Zr Bindungen aufweisen. Ein geringer Anteil an derartigen Kondensationsprodukten ist möglich, insbesondere wenn sie löslich, emulgierbar oder dispergierbar sind.

Bevorzugt umfasst die Haftvermittlerzusammensetzung mindestens eine Organo-Siliziumverbindung. In gewissen Fällen ist eine Kombination von Organo-Siliziumverbindungen und Organo-Titanverbindungen besonders bevorzugt.

Als Polyisocyanate sind insbesondere Diisocyanate oder Triisocyanate geeignet. Bevorzugt sind kommerziell erhältliche Polyisocyanate, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), sowie beliebige Mischungen der vorgenannten Isocyanate und deren Biurete oder deren Isocyanurate. Besonders bevorzugt sind MDI, TDI, HDI und IPDI und deren Biurete oder Isocyanurate.

Isocyanatgruppen aufweisende Polymere lassen sich insbesondere aus den gerade genannten Polyisocyanaten und Polyolen und/oder Polyaminen nach bekannter Art und Weise erhalten. Der Anteil des Haftvermittlers beträgt vorzugsweise 1 - 80 Gew.-%, insbesondere 5 - 70 Gew.-%, bevorzugt 10 - 40 Gew.-%, an der gesamten Haftvermittlerzusammensetzung. Wenn der Haftvermittler eine Organo-Siliziumverbindung oder eine Organo-Titanverbindung ist, beträgt der Anteil des Haftvermittlers vorzugsweise an der gesamten Haftvermittlerzusammensetzung vorzugsweise 1 - 15 Gew.-%.

In einer bevorzugten Ausführungsform weist die Haftvermittlerzusammensetzung zusätzlich mindestens ein Lösungsmittel auf. Als Lösungsmittel werden insbesondere Alkohole, Ether, Ketone, Ester oder Kohlenwasserstoffe, bevorzugt Isopropanol, Ethanol, Methylethylketon, Aceton, Hexan, Heptan, Xylol, Toluol oder Acetate, insbesondere Ethylacetat oder Butylacetat, verwendet. Weiterhin kann Wasser oder Gemische von Wasser mit den genannten Alkoholen, Ether, Ketonen, Ester oder Kohlenwasserstoffen als Lösungsmittel verwendet werden. Bevorzugt werden Lösungsmittel, welche einem Siedepunkt von ≤ 100 °C bei 1013 mbar aufweisen.

Die Haftvermittlerzusammensetzung kann weitere Bestandteile aufweisen, insbesondere sind dies Füllstoff, insbesondere Russ, Filmbildner, Tenside, Säuren, Katalysatoren, Biozide, Antiabsetzmittel, Trocknungsmittel, Stabilisatoren, Pigmente, Farbstoffe, Korrosionsschutzmittel, Geruchsstoffe, Thixotropiermittel, Füllstoffe, Entschäumer und dergleichen.

Bevorzugt besteht die Haftvermittlerzusammensetzung aus Haftvermittler und Lösungsmittel.

### Kurze Beschreibung der Figuren

Die Erfindung wird nachfolgend anhand des in den Figuren schematisch dargestellten Ausführungsbeispiels näher erläutert.

### Es zeigen dabei:

- Fig. 1: eine perspektivische Ansicht einer Verpackung, bzw. Packung, mit einem Behälter gemäß einem Ausführungsbeispiel der vorliegenden Erfindung, wobei sich der Behälter in einem Lagerzustand befindet;
- Fig. 2: die Ansicht aus Fig. 1, wobei sich ein erstes Verschlusselement in einer Freigabestellung befindet;
- Fig. 3: einen Halbschnitt A-A aus Fig. 1;
- Fig. 4: eine Seitenansicht eines Behälters mit einem Haltering gemäß dem Ausführungsbeispiel;
- Fig.5: perspektivisch ein Basiselement, welches auf den Haltering aus Fig. 4 aufgeschraubt ist, gemäß dem Ausführungsbeispiel;
- Fig. 6: eine perspektivische Untenansicht des Basiselements gemäß dem Ausführungsbeispiel;
- Fig. 7: eine Seitenansicht des Basiselements aus Fig. 6;
- Fig.8: perspektivisch von schräg oben das erste und zweite Verschlusselement gemäß dem Ausführungsbeispiel; und
- Fig. 9: perspektivisch lediglich das zweite Verschlusselement und nicht das erste Verschlusselement aus Fig. 8 von schräg unten.

In den Figuren bezeichnen gleiche Bezugszeichen gleiche oder funktionsgleiche Komponenten.

### Weg zur Ausführung der Erfindung

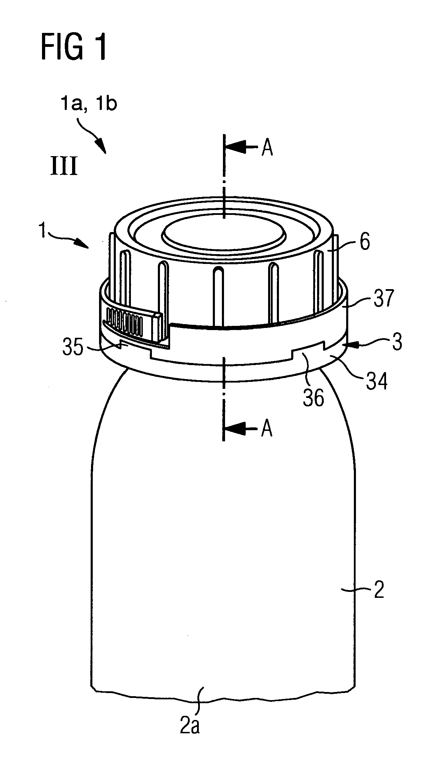

Fig. 1 zeigt eine Verpackung 1a, bzw. eine Packung 1b, mit einem flaschenförmigen Behälter 2, welcher in seinem Inneren eine Haftvermittlerzusammensetzung 2a aufweist und einen Verschluss 1, welcher an dem Behälter 2 angebracht ist. Die Packung 1b besteht aus der Verpackung 1a und der Haftvermittlerzusammensetzung 2a als Packgut.

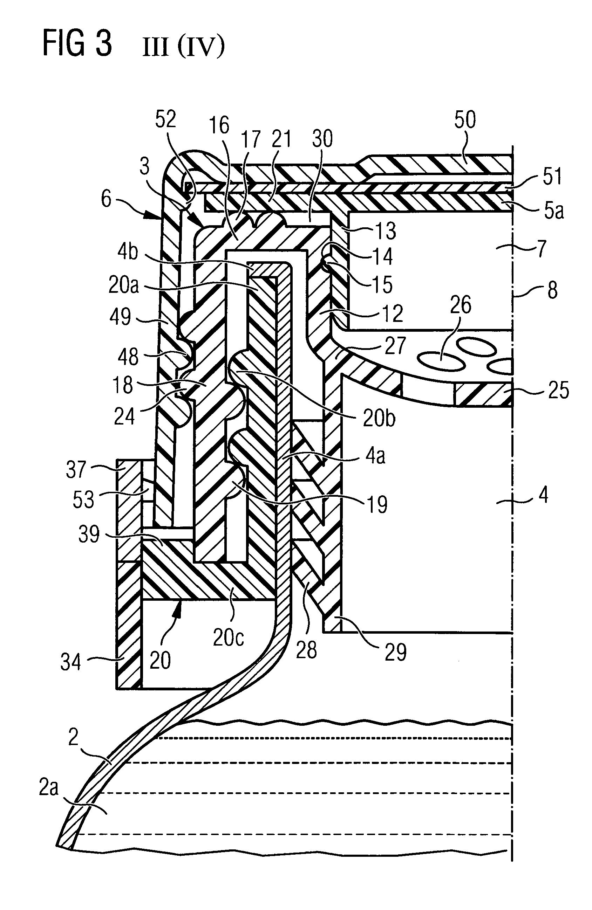

Wie aus Fig. 3 zu erkennen, ist an dem Behälter 2 ist ein tüllenförmiger Ausgießer 4a angeformt, welcher eine Ausgussöffnung 4 des Behälters 2 ausbildet. Auf den Ausgießer 4a ist ein Haltering 20 aufgeschoben, welcher mittels umbörteln des Endes 4b des Ausgießers 4a auf demselben fixiert ist.

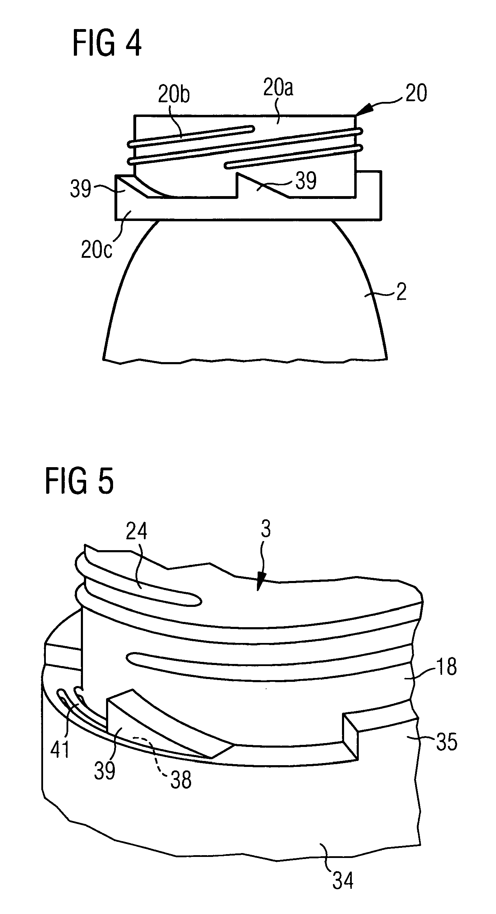

Der Haltering 20 weist einen in etwa L-förmigen Querschnitt mit einem langen Schenkel 20a, welcher sich in etwa parallel zur Längsachse 8 des Ausgießers 4a erstreckt, und einen kurzen Schenkel 20c, welcher sich in etwa radial zur Längsachse 8 des Ausgießers 4a erstreckt, auf. Der lange Schenkel 20a liegt innenseitig gegen den Ausgießer 4a an und weist außenseitig ein Außengewinde 20b auf. An dem von dem langen Schenkel 20a abgewandten Ende des kurzen Schenkels 20c sind, wie insb. aus Fig. 4 zu erkennen, mehrere rampenförmige Rasthaken 39 ausgebildet.

Auf den Haltering 20 ist ein Basiselement 3 aufgeschraubt. Dazu weist das Basiselement 3 einen Aufnahmeabschnitt 18 mit einem Innengewinde 19 und einem Außengewinde 24 auf. Wie in Fig. 3 dargestellt, befindet sich das Innengewinde 19 des Aufnahmeabschnitts im Eingriff mit dem Außengewinde 20b des Halterings 20.

Wie insb. Fig. 5 zu entnehmen, ist an dem einen Ende des Aufnahmeabschnitts 18 ein Kragen 34 mit Rastfenstern 38 und zu diesen benachbarten Rastfingern 41 angeformt. Wird das Basiselement 3 auf den Haltering 20 aufgeschraubt, so kommen deren Innengewinde 19, bzw. Außengewinde 20, miteinander in Eingriff und die Rastfinger 41 hintergreifen gegen Ende der Schraubbewegung die Rasthaken 39 elastisch, wobei sich dann die Rasthaken 39 durch die Rastfenster 38 hindurch erstrecken. Hierfür sind die Rastfinger 41 vorzugsweise aus einem elastischen Kunststoff ausgebildet, welcher jedoch eine ausreichend hohe Steifigkeit aufweist, um eine sichere, unlösbare Verbindung zwischen dem Basiselement 3 und dem Haltering 20 zu gewährleisten.

Wie in Fig. 3 weiter dargestellt, schließt sich an den Aufnahmeabschnitt 18 des Basiselements 3 ein Klemmabschnitt 16 rechtwinklig an, wobei dieser einen Querschnitt aufweist, der sich im Wesentlichen radial bezüglich der Längsachse 8 erstreckt. An seiner von dem Ausgießer 4a abgewandten Seite weist der Klemmabschnitt 16 insbesondere zwei Dichtwulste 17 auf.

An den Klemmabschnitt 16 schließt sich im Wesentlichen rechtwinklig ein Befestigungsabschnitt 12 an. Der Befestigungsabschnitt 12 weist eine umlaufende Dichtnut 14 auf, die in dem in Fig. 3 dargestellten Zustands im Eingriff mit einer an einer Dichtlippe 13 eines ersten Verschlusselements 5 ausgebildeten Dichtwulst 15 im Eingriff steht.

An den Befestigungsabschnitt 12 schließt sich ein Schalenelement 25 an, welches mehrere Löcher (beispielhaft mit dem Bezugszeichen 26 gekennzeichnet) aufweist. Das Schalenelement 25 ist in seinem Randbereich 27 mit dem Befestigungsabschnitt 12 verbunden und wölbt sich dabei in Richtung Behälterinnenraum.

Radial nach innen versetzt zur Längsachse 8 hin ist an dem Schalenelement 25 ein Ringabschnitt 29 mit Dichtlamellen (beispielhaft mit dem Bezugszeichen 28 gekennzeichnet) angeformt. Die Dichtlamellen 28 dichten einen Spalt 30 zwischen dem Basiselement 3 und dem Ausgießer 4a fluiddicht ab.

Der Befestigungsabschnitt 12, das Schalenelement 25 sowie der Ringabschnitt 29 erstrecken sich dabei in den Ausgießer 4a hinein.

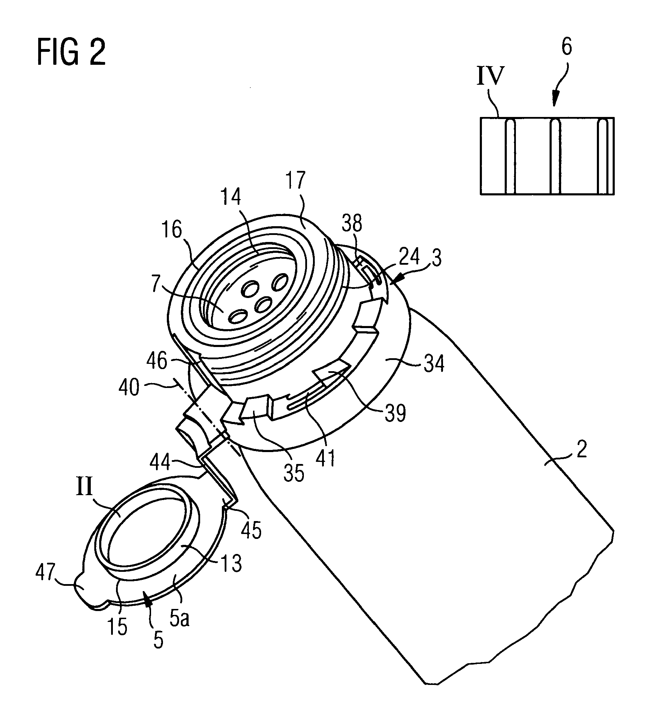

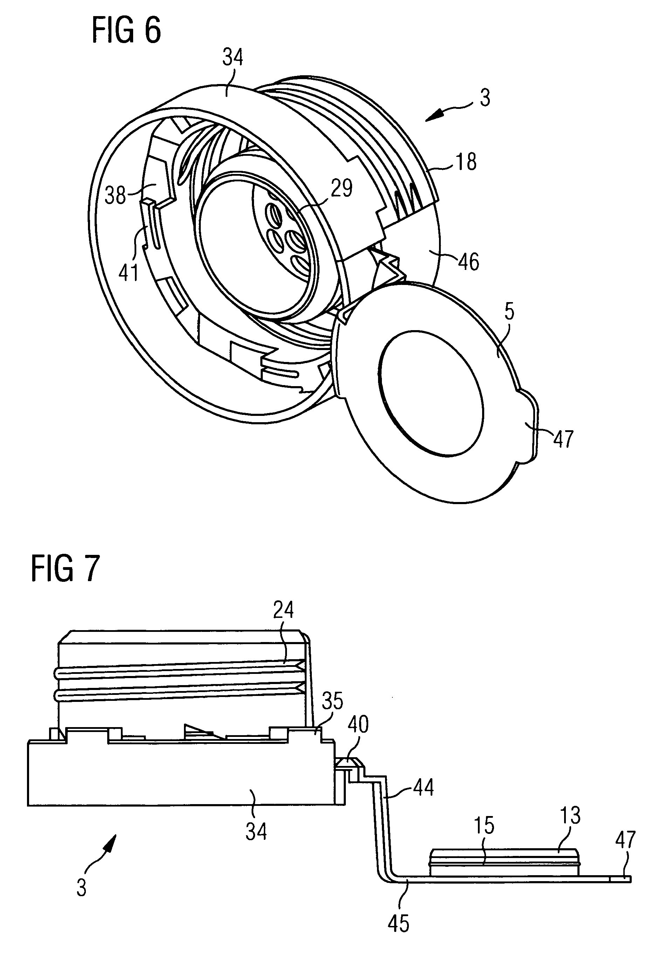

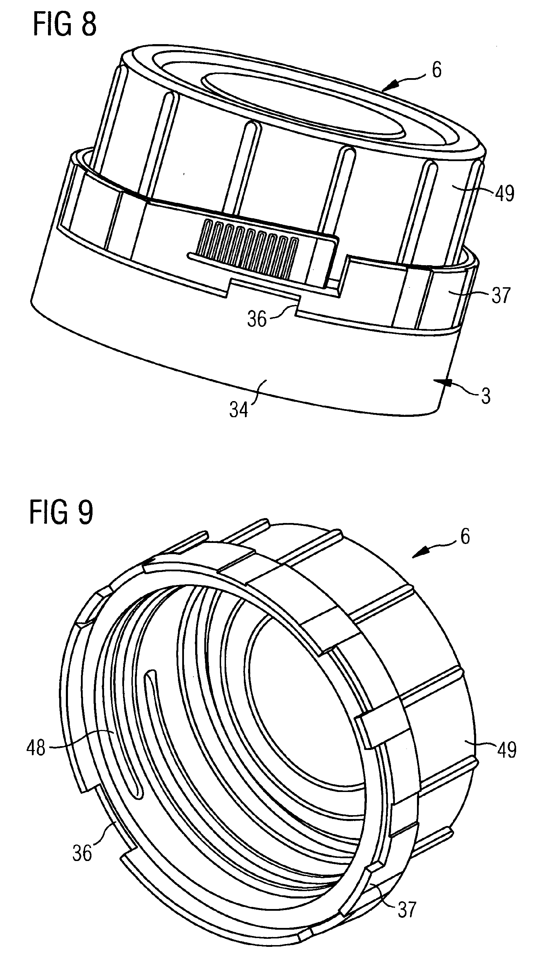

Wie insbesondere aus Fig. 2 zu erkennen, ist an dem Basiselement 3 ein z-förmiger Hebel 44 schwenkbar um eine Schwenkachse 40 gelagert, vorzugsweise an dem Kragen 34, angebracht (siehe auch Fig. 7). An seinem anderen Ende ist der Hebel 44 mit dem ersten Verschlusselement 5 verbunden. Das erste Verschlusselement 5 weist ein scheibenförmiges Element 5a auf, an welchem die Dichtlippe 13 angeformt ist. Die Dichtlippe 13 erstreckt sich dabei im Wesentlichen senkrecht zur Ebene des scheibenförmigen Elements 5a. Gegenüberliegend dem Anbindungsbereich 45 weist das scheibenförmige Element 5a eine Betätigungslasche 47 für eine Einhandbetätigung des ersten Verschlusselements 5 auf. In dem in Fig. 3 dargestellten Lagerzustand III des Behälters ist der Hebel 44 in einer Ausnehmung 46, siehe Fig. 6, in dem Kragen 34 und in dem Aufnahmeabschnitt 18 versenkt angeordnet. In diesem Zustand ist es möglich ein kappenförmiges zweites Verschlusselement 6, siehe Fig. 8 und 9, mit einem ein Innengewinde 48 aufweisenden Ringabschnitt 49 auf den das Außengewinde 24 aufweisenden Aufnahmeabschnitt 18 aufzuschrauben.

Das zweite Verschlusselement 6 weist unterhalb eines Deckelbereichs 50, an welchen sich der Ringabschnitt 49 anschließt, eine Dichtfolie 51 auf, welche an dem Deckelbereich 50 mittels einer Nase 52 formschlüssig gehalten ist.

An dem Ringabschnitt 49 (s. Fig. 8) ist ein Garantieband 37 mittels Abreißelementen 53 befestigt (s. Fig. 3). Das Garantieband 37 weist Ausnehmungen 36 auf, die in dem in Fig. 3 dargestellten Lagerzustand III im Eingriff mit Haltenocken 35, die an dem Kragen 34 des Basiselements 3 angeformt sind, stehen. Damit kann das zweite Verschlusselement 6 nicht von dem Basiselement 3 getrennt werden, ohne dass das Garantieband 37 entfernt wird. Nachfolgend sollen noch die unterschiedlichen Stellungen der einzelnen Elemente, insbesondere des ersten und zweiten Dichtelements 5, 6, erläutert werden.

Die Verpackung 1a, bzw. die Packung 1b, wird in dem in den Fig. 1 und 3 dargestellten Zustand zum Kunden, z. B. einem Automobilhersteller, transportiert und bei diesem solange gelagert bis Bedarf nach der Haftvermittlerzusammensetzung 2a besteht.

In dem in Fig. 3 dargestellten Lagerzustands III des Behälters 2 entfaltet die Dichtwulst 15 des ersten Verschlusselements 5 zusammen mit der Dichtnut 14 des Befestigungsabschnitts 12 des Basiselements 3 eine erste Dichtwirkung und verhindert somit ein Austreten der Haftvermittlerzusammensetzung 2a aus dem Ausgießer 4a. Dabei befindet sich das erste Verschlusselement 5 in der Verschließstellung I.

Das zweite Verschlusselement 6 ist in der in Fig. 3 dargestellten Stellung mittels der Gewinde 24, 48 mit dem Basiselement 3 verspannt. Dabei presst der Deckelbereich 50 mittels der Dichteinlage 51 gegen das erste Verschlusselement 5 und verhindert somit, dass sich die Dichtmittel 14, 15 relativ zueinander bewegen, wodurch sich eine zweite Dichtwirkung ergibt. Diese zweite Dichtwirkung wird dadurch noch vorzugsweise weiter erhöht, dass der Deckelbereich 50 mittels der Dichteinlage 51 einen Ringbereich 21 des Verschlusselements 5 gegen die Dichtwulste 17 auf dem Klemmabschnitt 16 presst. Damit ergibt sich eine weitere Barriere, welche die Haftvermittlerzusammensetzung 2a für eine Undichtigkeit des Verschlusses 1 überwinden müsste.

Ein Abschrauben des zweiten Verschlusselements 6 von dem Basiselement 3 wird im Anlieferungszustand mittels des Garantiebandes 37 verhindert.

Ist nun eine Applikation der Haftvermittlerzusammensetzung 2a gewünscht, so wird das Garantieband 37 entfernt, wodurch eine Drehbewegung des zweiten Verschlusselements 6 relativ zu dem Basiselement 3 freigegeben wird. Wird nun das zweite Verschlusselement 6 abgeschraubt, ergibt sich der Entnahmezustand IV des Behälters 2 (hierfür muss das zweite Verschlusselement 6 aus Fig. 3 weggedacht werden). Der Innenraum des Behälters 2 ist nunmehr mit der ersten Dichtwirkung mittels des ersten Dichtelements 5 abgedichtet. Das erste Verschlusselement 5 befindet sich nach wie vor in der Verschließstellung I.

Kurz vor der Applikation der Haftvermittlerzusammensetzung kann dann, insbesondere einhändig, das erste Verschlusselement 5 aus seiner Verschließstellung I in die Freigabestellung II mittels Verschwenken des ersten Verschlusselements 5 um die Schwenkachse 40 verbracht werden. Dazu wird die Betätigungslasche 47 mit dem Daumen einer Hand um die Schwenkachse 40 herum bewegt.

Anschließend wird beispielsweise der Behälter 2 gekippt und die Haftvermittlerzusammensetzung 2a strömt in die Ausgussöffnung 4, durch die Löcher 26 in dem Schalenelement 25 hindurch und aus dem Basiselement 3 heraus und kann dabei gerichtet auf einen zu behandelnden Bereich appliziert werden.

Der durch die Dichtmittel 14, 15 gebildete Schnappverschluss lässt sich dabei im Vergleich zu dem Abschrauben des zweiten Verschlusselements 6 von dem Basiselement 3 sehr schnell lösen.

Wird nun kurzfristig keine Haftvermittlerzusammensetzung 2a mehr benötigt, so wird das erste Verschlusselement 5 wieder um die Schwenkachse 40 verschwenkt und gegen das Basiselement 3 gepresst, so dass die Dichtmittel 14, 15 wieder in Eingriffen kommen, bzw. die Dichtwulst 15 in die Dichtnut 14 schnappt. Dies ist manuell sehr schnell durchzuführen.

Das Verbringen des ersten Verschlusselements 5 zwischen der Verschließstellung I und der Freigabestellung II kann nun beliebig oft wiederholt werden, bis feststeht, dass keine Haftvermittlerzusammensetzung 2a für längere Zeit benötigt wird und die Verpackung 1a, bzw. Packung 1b, beispielsweise wieder gelagert wird. Daraufhin kann auf einfache Weise auf das Basiselement 3 mit dem ersten Verschlusselement 5 in der Verschließstellung I das zweite Verschlusselement 6 aufgeschraubt werden, wobei dann der Innenraum des Behälters 2 wieder mit der zweiten Dichtwirkung abgedichtet ist.

Wird nun wieder Haftvermittlerzusammensetzung 2a benötigt, so kann das zweite Verschlusselement 6 wieder einfach von dem Basiselement 3 abgeschraubt werden und die vorstehenden Schritte können beliebig oft wiederholt werden.

Die Erfindung ist nicht auf in den vorstehenden Figuren dargestellten, speziellen Aufbau einer Verpackung 1a, bzw. eine Packung 1b, bzw. eines Verschlusses 1, beschränkt, sondern auf vielfältige Art und Weise modifizierbar.

### Bezugszeichenliste

- 1: Verschluss
- 1 a: Verpackung
- 1b: Packung
- 2: Behälter
- 2a: Fluid, Haftvermittlerzusammensetzung
- 3: Basiselement
- 4: Ausgussöffnung
- 4a: Ausgießer
- 5: erstes Verschlusselement
- 5a: scheibenförmiges Element
- 6: zweites Verschlusselement
- 7: Öffnung
- 8: Längsachse
- 12: Befestigungsabschnitt
- 13: Dichtlippe
- 14: Dichtnut
- 15: Dichtwulst
- 16: Klemmabschnitt
- 17: Dichtwulst
- 18: Aufnahmeabschnitt
- 19: Innengewinde
- 20: Haltering
- 20a: langer Schenkel
- 20b: Außengewinde
- 20c: kurzer Schenkel
- 21: Ringbereich
- 24: Außengewinde
- 25: Schalenelement
- 26: Loch
- 27: Randbereich
- 28: Dichtlamellen
- 29: Ringabschnitt
- 30: Spalt
- 34: Kragen
- 35: Haltenocke
- 36: Ausnehmung
- 37: Garantieband
- 38: Rastfenster
- 39: Rasthaken
- 40: Schwenkachse
- 41: Rastfinger
- 44: Hebel
- 45: Anbindungsbereich
- 46: Ausnehmung
- 47: Betätigungslasche
- 48: Innengewinde
- 49: Ringabschnitt
- 50: Deckelbereich
- 51: Dichteinlage
- 52: Nase
- 53: Abreißelement

- I: Verschließstellung
- II: Freigabestellung
- III: Lagerzustand
- IV: Entnahmezustand

## Patentansprüche

1. Verschluss (1) für einen Behälter (2) zur Aufnahme eines Fluids, insbesondere eines Haftvermittlers,
- mit einem Basiselement (3), welches im Bereich einer Ausgussöffnung (4) des Behälters (2) befestigbar ist und welches eine Öffnung (7) aufweist, durch die hindurch das Fluid aus dem Behälter (2) entnehmbar ist,
- mit einem ersten Verschlusselement (5), welches in einer Verschließstellung (I) desselben die Öffnung (7) des Basiselements (3) fluiddicht verschließt und welches in einer Freigabestellung (II) desselben die Öffnung (7) des Basiselements (3) freigibt, und
- mit einem an dem Basiselement (3) wiederholt lösbar befestigbaren zweiten Verschlusselement (6), welches für einen Lagerzustand (III) des Behälters (2) das erste Verschlusselement (5) in seiner Verschließstellung (I) sichert und für einen Entnahmezustand (IV) des Behälters (2) das erste Verschlusselement (5) für ein Verbringen desselben aus seiner Verschließstellung (I) in die Freigabestellung (II) freigibt;
**dadurch gekennzeichnet,**
**dass** das erste Verschlusselement (5) an dem Basiselement (3) zwischen seiner Verschließstellung (I) und seiner Freigabestellung (II) um eine Schwenkachse (40) verschwenkbar gelagert ist;
und **dass** die Schwenkachse (40) an einem Kragen (34) des Basiselements (3), welcher sich an den Aufnahmeabschnitt (18) anschließt, ausgebildet ist und ein insbesondere z-förmiger Hebel (44) die Schwenkachse (40) mit dem ersten Verschlusselement (5) in einem Anbindungsbereich (45) desselben verbindet.

2. Verschluss nach Anspruch 1,
**dadurch gekennzeichnet,**
**dass** das Basiselement (3) eine Ausnehmung (46) aufweist, in welcher der Hebel (44) in der Verschließstellung (I) des ersten Verschlusselements (5) versenkt angeordnet ist.

3. Verschluss nach Anspruch 1 oder Anspruch 2,
**dadurch gekennzeichnet, dass** das erste Verschlusselement (5) insbesondere gegenüber seinem Anbindungsbereich (45) an dem Hebel (44) eine Betätigungslasche (47) zum Untergreifen für eine Ein-HandBetätigung des ersten Verschlusselements (5) aus der Verschließstellung (I) in die Freigabestellung (II) aufweist.

4. Verschluss nach wenigstens einem der Ansprüche 1 bis 3,
**dadurch gekennzeichnet,**
**dass** das Basiselement (3) und/oder der Hebel (44) und/oder das erste Verschlusselement (5) einstückig ausgebildet sind.

5. Verschluss nach wenigstens einem der vorhergehenden Ansprüche,
**dadurch gekennzeichnet,**
**dass** das erste Verschlusselement (5) eine erste Betätigungszeit für ein Verbringen desselben aus der Verschließstellung (I) in die Freigabestellung (II) und/oder umgekehrt aufweist und das zweite Verschlusselement (6) eine zweite Betätigungszeit für ein Verbringen desselben aus seiner dem Lagerzustand (III) des Behälters (2) zugeordneten Stellung in seine dem Entnahmezustand (IV) des Behälters (2) zugeordnete Stellung und/oder umgekehrt aufweist, wobei die erste Betätigungszeit kürzer als die zweite Betätigungszeit vorgesehen ist.

6. Verschluss nach wenigstens einem der vorhergehenden Ansprüche,
**dadurch gekennzeichnet,**
**dass** das erste Verschlusselement (5) in der Verschließstellung (I) eine erste Dichtwirkung und das zweite Verschlusselement (6) in seiner dem Lagerzustand (III) des Behälters (2) zugeordneten Stellung eine zweite Dichtwirkung entfaltet, wobei die zweite Dichtwirkung größer als die erste Dichtwirkung vorgesehen ist.

7. Verschluss nach Anspruch 5 oder 6,
**dadurch gekennzeichnet,**
**dass** die erste Betätigungszeit 1,5 bis 10 mal kürzer als die zweite Betätigungszeit und/oder die zweite Dichtwirkung 1,5 bis 1000 mal größer als die erste Dichtwirkung vorgesehen ist.

8. Verschluss nach wenigstens einem der vorhergehenden Ansprüche,
**dadurch gekennzeichnet,**
**dass** eine Schnappverbindung (14, 15) vorgesehen ist, mittels welcher das erste Verschlusselement (5) und das Basiselement (3) miteinander verbindbar sind und/oder eine Schraubverbindung (24, 48) vorgesehen ist, mittels welcher das zweite Verschlusselement (6) und das Basiselement (3) miteinander verbindbar sind.

9. Verschluss nach wenigstens einem der vorhergehenden Ansprüche,
**dadurch gekennzeichnet, dass** ein Ausgießer (4a) die Ausgussöffnung (4) ausbildet und das Basiselement (3) an dem Ausgießer (4a) und/oder an einem an dem Ausgießer (4a) angebrachten Haltering(20) befestigbar ist.

10. Verschluss nach wenigstens einem der vorhergehenden Ansprüche,
**dadurch gekennzeichnet,**
**dass** das Basiselement (3) einen Befestigungsabschnitt (12) für ein Befestigen des ersten Verschlusselements (5) in der Verschließstellung (I) aufweist.

11. Verschluss nach Anspruch 10,
**dadurch gekennzeichnet,**
**dass** das erste Verschlusselement (5) eine Dichtlippe (13) aufweist, wobei die Dichtlippe in der Verschließstellung (I) des ersten Verschlusselements (5) fluiddicht gegen den Befestigungsabschnitt (12) anliegt.

12. Verschluss nach Anspruch 11,
**dadurch gekennzeichnet,**
**dass** der Befestigungsabschnitt (12) eine Dichtnut (14) und die Dichtlippe (13) des ersten Verschlusselements (5) eine Dichtwulst (15) aufweist, wobei die Dichtwulst (15) in der Verschließstellung (I) des ersten Verschlusselements (5) in die Dichtnut (14) lösbar elastisch eingreift.

13. Verschluss nach wenigstens einem der vorhergehenden Ansprüche,
**dadurch gekennzeichnet,**
**dass** das Basiselement (3) einen Klemmabschnitt (16) aufweist, welcher in dem Lagerzustand (III) des Behälters (2) zum Sichern des ersten Verschlusselements (5) in seiner Verschließstellung (II) einen Ringbereich (21) des ersten Verschlusselements (5) zwischen sich und dem zweiten Verschlusselement (6) fluiddicht klemmt.

14. Verschluss nach Anspruch 13,
**dadurch gekennzeichnet,**
**dass** der Klemmabschnitt (16) wenigstens eine Dichtwulst (17) aufweist.

15. Verschluss nach wenigstens einem der vorhergehenden Ansprüche,
**dadurch gekennzeichnet,**
**dass** das Basiselement (3) einen Aufnahmeabschnitt (18) aufweist, innerhalb welchem der Ausgießer (4a) des Behälters (2) für ein Befestigen des Basiselements (3) an dem Behälter (2) aufnehmbar ist, wobei der Aufnahmeabschnitt (18) des Basiselements (3) vorzugsweise ein Innengewinde (19) zum Aufschrauben des Basiselements (3) auf den Behälter (2), insbesondere auf den Haltering (20), und/oder vorzugweise ein Außengewinde (24) zum Aufschrauben des zweiten Verschlusselements (6) auf das Basiselement (3) aufweist.

16. Verschluss nach Anspruch 15,
**dadurch gekennzeichnet,**
**dass** sich der Klemmabschnitt (16) abgewinkelt an den Aufnahmeabschnitt (18) anschließt und/oder sich der Befestigungsabschnitt (12) abgewinkelt für ein Eingreifen in den Ausgießer (4a) an den Klemmabschnitt (16) anschließt.

17. Verschluss nach wenigstens einem der vorhergehenden Ansprüche,
**dadurch gekennzeichnet,**
**dass** das Basiselement (3) ein Schalenelement (25) mit wenigstens einem Loch (26), vorzugsweise mit 6 bis 12 Löchern, aufweist, welches behälterseitig bezüglich der Öffnung (7) des Basiselements (2) angeordnet ist und sich von dieser wegwölbt, wobei mittels des wenigstens einen Lochs (26) das Fluid der Öffnung (7) zuführbar ist.

18. Verschluss nach Anspruch 17,
**dadurch gekennzeichnet,**
**dass** das Schalenelement (25) in seinem Randbereich (27) mit dem Befestigungsabschnitt (12) verbunden ist.

19. Verschluss nach Anspruch 17 oder 18,
**dadurch gekennzeichnet,**
**dass** das Basiselement (3) einen Ringabschnitt (29) mit Dichtmitteln, insbesondere Dichtlamellen (28), für ein Eingreifen in den Ausgießer (4a) aufweist, um einen Spalt (30) zwischen dem Befestigungsabschnitt (12) und dem Ausgießer (4a) abzudichten, wobei der Ringabschnitt (29) vorzugsweise nach innen versetzt zu dem Befestigungsabschnitt (12) ausgebildet und/oder vorzugsweise an dem Schatenelement (25) angeformt ist.

20. Verschluss nach wenigstens einem der vorhergehenden Ansprüche 15 bis 19,
**dadurch gekennzeichnet,**
**dass** das Basiselement (3) einen sich an den Aufnahmeabschnitt (18) anschließenden Kragen (34) aufweist, welcher mit wenigstens einer Haltenocke (35) für einen Eingriff in wenigstens eine Ausnehmungen (36) eines Garantiebands (37) des zweiten Verschlusselements (6) versehen ist.

21. Verschluss nach wenigstens einem der vorhergehenden Ansprüche 15 bis 20,
**dadurch gekennzeichnet,**
**dass** das Basiselement (3) einen sich an den Aufnahmeabschnitt (18) anschließenden Kragen (34) aufweist, welcher mit wenigstens einem Rastfenster (38) für einen unlösbaren Eingriff mit wenigstens einem Rasthaken (39) des Ausgießers (4a), insbesondere mit einem Rasthaken (39) des an dem Ausgießer (4a) angebrachten Halterings (20), versehen ist.

22. Verschluss nach wenigstens einem der vorhergehenden Ansprüche,
**dadurch gekennzeichnet,**
**dass** das zweite Verschlusselement (6) gegenüber dem Basiselement (3) insbesondere mittels einer Schraubverbindung (24, 48) in dem Lagerzustand (III) verspannt ist, wobei das zweite Verschlusselement (6) das erste Verschlusselement (5) für das Sichern desselben in der Verschließstellung (I) gegen das Basiselement (3) presst.

23. Verschluss nach wenigstens einem der vorhergehenden Ansprüche,
**dadurch gekennzeichnet,**
**dass** das zweite Verschlusselement (6) einen Ringabschnitt (49), insbesondere mit einem Innengewinde (48), aufweist.

24. Verschluss nach Anspruch 23,
**dadurch gekennzeichnet,**
**dass** das zweite Verschlusselement (6) ein an dem Ringabschnitt (49) befestigtes Garantieband (37) aufweist.

25. Verpackung (1 a) für ein Fluid, insbesondere für eine Haftvermittlerzusammensetzung, mit einem Behälter (2), welcher eine Ausgussöffnung (4) aufweist, und mit einem Verschluss (1) nach wenigstens einem der Ansprüche 1 bis 24, welcher im Bereich der Ausgussöffnung (4) für ein Verschließen, bzw. Freigeben, derselben angebracht ist.

26. Packung (1 b) bestehend aus einer Verpackung (1a) nach Anspruch 25 und einem Fluid (2a), insbesondere einer Haftvermittlerzusammensetzung (2a).

27. Packung nach Anspruch 26, **dadurch gekennzeichnet, dass** die Haftvermittlerzusammensetzung mindestens einen Haftvermittler aufweist, welcher ausgewählt ist aus der Gruppe bestehend aus Organo-Siliziumverbindungen, Organo-Titanverbindungen, Organo-Zirkoniumverbindungen, Polyisocyanate, Isocyanat aufweisende Polymere und Mischungen daraus.

28. Packung gemäss Anspruch 26 oder 27, **dadurch gekennzeichnet, dass** die Haftvermittlerzusammensetzung mindestens eine Organo-Siliziumverbindung der Formeln (I) oder (II) oder (III) oder (IV) als Haftvermittler aufweist 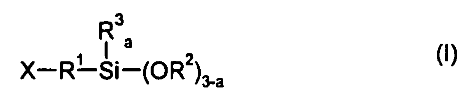 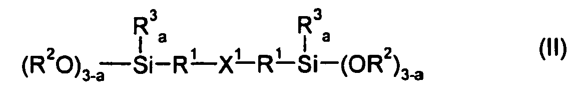 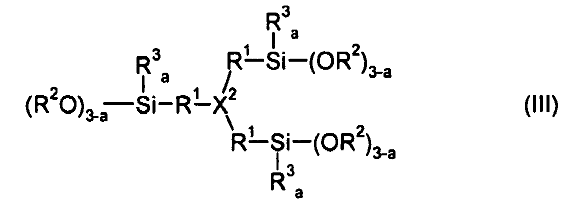 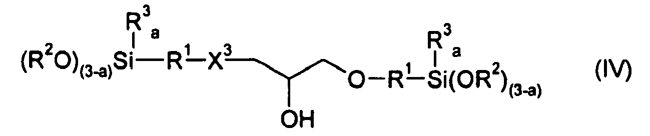 wobei
R¹ für eine lineare oder verzweigte, gegebenenfalls cyclische, Alkylengruppe mit 1 bis 20 C-Atomen, gegebenenfalls mit aromatischen Anteilen, und welche gegebenenfalls ein oder mehrere Heteroatome, insbesondere Stickstoffatome, aufweist, steht;
R² für H oder für eine Alkylgruppe mit 1 bis 5 C-Atomen, insbesondere für Methyl oder Ethyl oder eine Acylgruppe, insbesondere für Acetyl, bevorzugt Methyl, steht;
R³ für eine Alkylgruppe mit 1 bis 8 C-Atomen,insbesondere Methyl,steht; X für H, oder für eine funktionelle Gruppe steht, welche ausgewählt ist aus der Gruppe umfassend Oxiran, OH, (Meth)acryloxy, Amin, SH, Acylthio und Vinyl, bevorzugt Amin;
X¹ für eine funktionelle Gruppe steht, welche ausgewählt ist aus der Gruppe umfassend NH, S, S₂ und S₄;
X² für eine funktionelle Gruppe steht, welche ausgewählt ist aus der Gruppe umfassend N und Isocyanurat;
X³ für eine funktionelle Gruppe steht, welche ausgewählt ist bestehend aus der Gruppe S und NR⁵, wobei R⁵ für H, Alkyl, Cycloalkyl, Aryl oder für den Rest der Formel -Si(R³)ₐ(OR²)₍₃₋ₐ₎ steht;
a für einen der Werte 0, 1 oder 2, bevorzugt 0, steht.

29. Packung gemäss Anspruch 26 oder 27 oder 28, **dadurch gekennzeichnet, dass** die Haftvermittlerzusammensetzung mindestens eine Organo-Siliziumverbindung und mindestens eine OrganoTitanverbindung aufweist.

30. Packung nach einem der Ansprüche 26 bis 29, **dadurch gekennzeichnet, dass** die Haftvermittlerzusammensetzung weiterhin ein Lösungsmittel, insbesondere mit einem Siedepunkt von ≤ 100 °C bei 1013 mbar aufweist.

## Claims

1. Closure (1) for a container (2) for holding a fluid, more particularly an adhesion promoter,
- having a base element (3) which can be fastened in the region of a pour opening (4) of the container (2) and which has an opening (7) through which the fluid can be withdrawn from the container (2),
- having a first closure element (5) which in a closed position (I) thereof effects fluid-tight sealing of the opening (7) of the base element (3) and which in an open position (II) thereof releases the opening (7) of the base element (3), and
- having a second closure element (6), which can be fastened to the base element (3) in such a way as to be repeatedly releasable and which, in a container (2) storage mode (III), secures the first closure element (5) in its closed position (I) and, in a container (2) dispensing mode (IV), releases the first closure element (5) to bring it from its closed position (I) into the open position (II),
**characterized in that**
the first closure element (5) is mounted on the base element (3) in such a way that it can be swivelled between its closed position (I) and its open position (II) about a swivel axle (40);
and that
the swivel axle (40) is formed on a collar (34) of the base element (3) that follows the holding section (18), and a lever (44), more particularly a z-shaped lever (44) connects the swivel axle (40) to the first closure element (5) in an attachment region (45) thereof.

2. Closure according to Claim 1,
**characterized in that**
the base element (3) has a recess (46) in which the lever (44) is disposed retractedly in the closed position (I) of the first closure element (5).

3. Closure according to Claim 1 or Claim 2,
**characterized in that** the first closure element (5), more particularly opposite its attachment region (45) on the lever (44), has an actuating tab (47) for gripping from beneath for single-handed actuation of the first closure element (5) from the closed position (I) into the open position (II).

4. Closure according to at least one of Claims 1 to 3,
**characterized in that**
the base element (3) and/or the lever (44) and/or the first closure element (5) are formed as one piece.

5. Closure according to at least one of the preceding claims,
**characterized in that**
the first closure element (5) exhibits a first actuation time for moving it from the closed position (I) into the open position (II) and/or vice versa, and the second closure element (6) exhibits a second actuation time for bringing it from its position assigned to the container (2) storage mode (III) into its position assigned to the container (2) dispensing mode (IV), and/or vice versa, provision being made for the first actuation time to be shorter than the second actuation time.

6. Closure according to at least one of the preceding claims,
**characterized in that**
the first closure element (5) in the closed position (I) develops a first sealing effect and the second closure element (6) in its position assigned to the container (2) storage mode (III) develops a second sealing effect, provision being made for the second sealing effect to be greater than the first sealing effect.

7. Closure according to Claim 5 or 6,
**characterized in that**
provision is made for the first actuation time to be 1.5 to 10 times shorter than the second actuation time and/or for the second sealing effect to be 1.5 to 1000 times greater than the first sealing effect.

8. Closure according to at least one of the preceding claims,
**characterized in that**
a snap connection (14, 15) is provided by means of which the first closure element (5) and the base element (3) can be connected to one another, and/or a screw connection (24, 48) is provided by means of which the second closure element (6) and the base element (3) can be connected to one another.

9. Closure according to at least one of the preceding claims,
**characterized in that** a spout (4a) forms the pour opening (4), and the base element (3) can be fastened to the spout (4a) and/or to a retaining ring (20) mounted on the spout (4a).

10. Closure according to at least one of the preceding claims,
**characterized in that**
the base element (3) has a fastening section (12) for the purpose of fastening of the first closure element (5) in the closed position (I).

11. Closure according to Claim 10,
**characterized in that**
the first closure element (5) has a sealing lip (13), the sealing lip, in the closed position (I) of the first closure element (5), bearing against the fastening section (12) in a fluid-tight manner.

12. Closure according to Claim 11,
**characterized in that**
the fastening section (12) has a sealing groove (14), and the sealing lip (13) of the first closure element (5) has a sealing bead (15), the sealing bead (15), in the closed position (I) of the first closure element (5), elastically engaging releasably into the sealing groove (14).

13. Closure according to at least one of the preceding claims,
**characterized in that**
the base element (3) has a clamping section (16) which, in the container (2) storage mode (III), for the purpose of securing the first closure element (5) in its closed position (II), clamps an annular region (21) of the first closure element (5) between itself and the second closure element (6) in a fluid-tight manner.

14. Closure according to Claim 13,
**characterized in that**
the clamping section (16) has at least one sealing bead (17).

15. Closure according to at least one of the preceding claims,
**characterized in that**
the base element (3) has a holding section (18) within which the spout (4a) of the container (2) can be held for the purpose of fastening the base element (3) on the container (2), the holding section (18) of the base element (3) having preferably an internal thread (19) for the screwing of the base element (3) onto the container (2), more particularly onto the retaining ring (20), and/or having preferably an external thread (24) for the screwing of the second closure element (6) onto the base element (3).

16. Closure according to Claim 15,
**characterized in that**
the clamping section (16) follows the holding section (18) at an angle, and/or the fastening section (12) follows the clamping section (16) at an angle for engagement into the spout (4a).

17. Closure according to at least one of the preceding claims,
**characterized in that**
the base element (3) has a tray element (25) having at least one hole (26), preferably having 6 to 12 holes, which is disposed on the container side in relation to the opening (7) of the base element (2) and which bows out away from said opening (7), the at least one hole (26) allowing the fluid to be supplied to the opening (7).

18. Closure according to Claim 17,
**characterized in that**
the tray element (25) is connected in its marginal region (27) to the fastening section (12).

19. Closure according to Claim 17 or 18,
**characterized in that**
the base element (3) has an annular section (29) with sealing means, more particularly sealing lamellae (28), for engagement into the spout (4a) in order to seal off a gap (30) between the fastening section (12) and the spout (4a), the annular section (29) being formed preferably with an internal offset with respect to the fastening section (12), and/or being preferably moulded-on on the tray element (25).

20. Closure according to at least one of preceding Claims 15 to 19,
**characterized in that**
the base element (3) has a collar (34) which follows the holding section (18) and which is provided with at least one retaining cam (35) for engagement into at least one recess (36) of a guarantee band (37) of the second closure element (6).

21. Closure according to at least one of preceding Claims 12 to 17,
**characterized in that**
the base element (3) has a collar (34) which follows the holding section (18) and which is provided with at least one latching window (38) for non-releasable engagement with at least one latching hook (39) of the spout (4a), more particularly with a latching hook (39) of the retaining ring (20) mounted on the spout (4a).

22. Closure according to at least one of the preceding claims,
**characterized in that**
in the storage mode (III) the second closure element (6) is braced with respect to the base element (3), more particularly by means of a screw connection (24, 48), the second closure element (6) securing the first closure element (5) by pressing it against the base element (3) in the closed position (I).

23. Closure according to at least one of the preceding claims,
**characterized in that**
the second closure element (6) has an annular section (49), more particularly having an internal thread (48).

24. Closure according to Claim 23,
**characterized in that**
the second closure element (6) has a guarantee band (37) fastened to the annular section (49).

25. Packaging form (1 a) for a fluid, more particularly for an adhesion promoter composition, having a container (2) which has a pour opening (4), and having a closure (1) according to at least one of Claims 1 to 24, which is mounted in the region of the pour opening (4) for the purpose of closing or opening thereof.

26. Pack (1 b) consisting of a packaging form (1 a) according to Claim 25 and a fluid (2a), more particularly an adhesion promoter composition (2a).

27. Pack according to Claim 26, **characterized in that** the adhesion promoter composition comprises at least one adhesion promoter selected from the group consisting of organosilicon compounds, organotitanium compounds, organozirconium compounds, polyisocyanates, isocyanate-containing polymers and mixtures thereof.

28. Pack according to Claim 26 or 27, **characterized in that** the adhesion promoter composition comprises at least one organosilicon compound of the formulae (I) or (II) or (III) or (IV) as adhesion promoter(s) 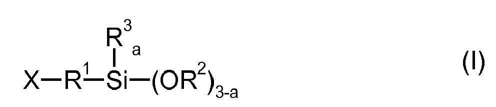 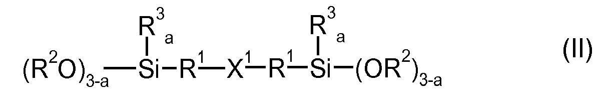 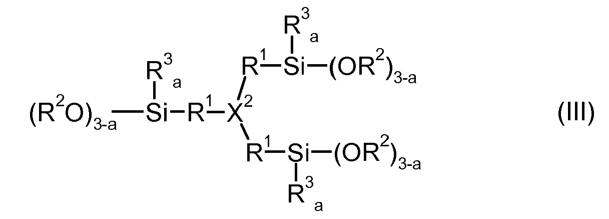 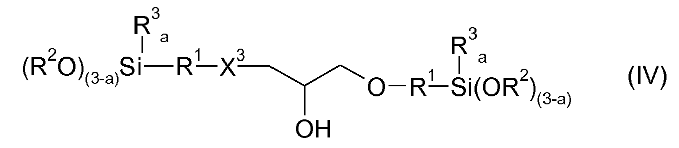 where
R¹ is a linear or branched, optionally cyclic, alkylene group having 1 to 20 C atoms, optionally with aromatic fractions, and which optionally has one or more heteroatoms, more particularly nitrogen atoms;
R² is H or is an alkyl group having 1 to 5 C atoms, more particularly methyl or ethyl, or an acyl group, more particularly acetyl, preferably methyl;
R³ is an alkyl group having 1 to 8 C atoms, more particularly methyl;
X is H, or is a functional group which is selected from the group encompassing oxirane, OH, (meth)acryloyloxy, amine, SH, acylthio and vinyl, preferably amine;
X¹ is a functional group which is selected from the group encompassing NH, S, S₂ and S₄;
X² is a functional group which is selected from the group encompassing N and isocyanurate;
X³ is a functional group which is selected consisting of the group S and NR⁵, where R⁵ is H, alkyl, cycloalkyl, aryl or the radical of the formula -Si(R³)ₐ(OR²)₍₃₋ₐ₎;
a is one of the values 0, 1 or 2, preferably 0.

29. Pack according to Claim 26 or 27, **characterized in that** the adhesion promoter composition comprises at least one organosilicon compound and at least one organotitanium compound.

30. Pack according to any one of Claims 26 to 29, **characterized in that** the adhesion promoter composition further comprises a solvent, more particularly having a boiling point of ≤ 100°C at 1013 mbar.

## Revendications

1. Fermeture (1) pour un récipient (2) destiné à recevoir un fluide, en particulier un promoteur d'adhérence,
- présentant un élément de base (3), qui peut être fixé dans la zone d'une ouverture de déversement (4) du récipient (2) et qui présente une ouverture (7) au travers de laquelle le fluide peut être prélevé du récipient (2),
- présentant un premier élément de fermeture (5), qui ferme de manière étanche au fluide, dans une position de fermeture (I) de celui-ci, l'ouverture (7) de l'élément de base (3) et qui libère, dans une position de libération (II) de celui-ci, l'ouverture (7) de l'élément de base (3), et
- présentant un deuxième élément de fermeture (6) pouvant être fixé de manière amovible et répétée sur l'élément de base (3), qui fixe, pour un état d'entreposage (III) du récipient (2), le premier élément de fermeture (5) dans sa position de fermeture (I) et qui libère, pour un état de prélèvement (IV) du récipient (2), le premier élément de fermeture (5) pour amener celui-ci de sa position de fermeture (I) dans la position de libération (II) ;
**caractérisé en ce que** le premier élément de fermeture (5) est logé sur l'élément de base (3) de manière pivotable entre sa position de fermeture (I) et sa position de libération (II) autour d'un axe de pivotement (40) ;
et **en ce que** l'axe de pivotement (40) est réalisé sur un collier (34) de l'élément de base (3) qui se rattache à la section de réception (18) et un levier (44) en particulier en forme de z relie l'axe de pivotement (40) au premier élément de fermeture (5) dans une zone de raccordement (45) de celui-ci.

2. Fermeture selon la revendication 1, **caractérisée en ce que** l'élément de base (3) présente un évidement (46), dans lequel le levier (44) est disposé en étant escamoté lorsqu'il se trouve dans la position de fermeture (I) du premier élément de fermeture (5).

3. Fermeture selon la revendication 1 ou 2, **caractérisée en ce que** le premier élément de fermeture (5) présente, en particulier à l'opposé de sa zone de raccordement (45) au levier (44), une patte d'actionnement (47) à agripper pour un actionnement à une main du premier élément de fermeture (5) de la position de fermeture (I) dans la position de libération (II).

4. Fermeture selon au moins l'une quelconque des revendications 1 à 3, **caractérisée en ce que** l'élément de base (3) et/ou le levier (44) et/ou le premier élément de fermeture (5) sont réalisés en une seule pièce.

5. Fermeture selon au moins l'une quelconque des revendications précédentes, **caractérisée en ce que** le premier élément de fermeture (5) présente un premier temps d'actionnement pour l'amener de la position de fermeture (I) dans la position de libération (II) et/ou inversement et le deuxième élément de fermeture (6) présente un deuxième temps d'actionnement pour l'amener de sa position associée à l'état d'entreposage (III) du récipient (2) dans sa position associée à l'état de prélèvement (IV) du récipient (2) et/ou inversement, où le premier temps d'actionnement est prévu en étant plus court que le deuxième temps d'actionnement.

6. Fermeture selon au moins l'une quelconque des revendications précédentes, **caractérisée en ce que** le premier élément de fermeture (5) dans la position de fermeture (I) a un premier effet d'étanchéité et le deuxième élément de fermeture (6) dans sa position associée à l'état d'entreposage (III) du récipient (2) a un deuxième effet d'étanchéité, où le deuxième effet d'étanchéité est prévu en étant plus grand que le premier effet d'étanchéité.

7. Fermeture selon la revendication 5 ou 6, **caractérisée en ce que** le premier temps d'actionnement est 1,5 à 10 fois plus court que le deuxième temps d'actionnement et/ou le deuxième effet d'étanchéité est 1,5 à 1000 fois plus grand que le premier effet d'étanchéité.

8. Fermeture selon au moins l'une quelconque des revendications précédentes, **caractérisée en ce qu'**on a prévu un assemblage encliqueté (14, 15) au moyen duquel le premier élément de fermeture (5) et l'élément de base (3) peuvent être assemblés l'un à l'autre et/ou on a prévu un assemblage vissé (24, 48), au moyen duquel le deuxième élément de fermeture (6) et l'élément de base (3) peuvent être assemblés l'un à l'autre.

9. Fermeture selon au moins l'une quelconque des revendications précédentes, **caractérisée en ce qu'**un bec verseur (4a) forme l'ouverture de déversement (4) et l'élément de base (3) peut être fixé au bec verseur (4a) et/ou à un anneau de blocage (20) agencé sur le bec verseur (4a).

10. Fermeture selon au moins l'une quelconque des revendications précédentes, **caractérisée en ce que** l'élément de base (3) présente une section de fixation (12) pour une fixation dudit premier élément de fermeture (5) dans la position de fermeture (I).

11. Fermeture selon la revendication 10, **caractérisée en ce que** le premier élément de fermeture (5) présente une lèvre d'étanchéité (13), où la lèvre d'étanchéité se place, dans la position de fermeture (I) du premier élément de fermeture (5), de manière étanche aux fluides, contre la section de fixation (12).

12. Fermeture selon la revendication 11, **caractérisée en ce que** la section de fixation (12) présente une rainure d'étanchéité (14) et la lèvre d'étanchéité (13) du premier élément de fermeture (5) présente un bourrelet d'étanchéité (15), où le bourrelet d'étanchéité (15) s'agrippe, dans la position de fermeture (I) du premier élément de fermeture (5), de manière élastique et amovible dans la rainure d'étanchéité (14).

13. Fermeture selon au moins l'une quelconque des revendications précédentes, **caractérisée en ce que** l'élément de base (3) présente une section de serrage (16) qui, dans l'état d'entreposage (III) du récipient (2), pour fixer le premier élément de fermeture (5) dans sa position de fermeture (II), enserre de manière étanche aux fluides une zone annulaire (21) du premier élément de fermeture (5) entre elle-même et le deuxième élément de fermeture (6) .

14. Fermeture selon la revendication 13, **caractérisée en ce que** la section de serrage (16) présente au moins un bourrelet d'étanchéité (17).

15. Fermeture selon au moins l'une quelconque des revendications précédentes, **caractérisée en ce que** l'élément de base (3) présente une section de réception (18), dans laquelle peut être placé le bec verseur (4a) du récipient (2) pour une fixation de l'élément de base (3) au récipient (2), où la section de réception (18) de l'élément de base (3) présente de préférence un filet interne (19) pour le vissage de l'élément de base (3) sur le récipient (2), en particulier sur l'anneau de blocage (20), et/ou de préférence un filet externe (24) pour le vissage du deuxième élément de fermeture (6) sur l'élément de base (3).

16. Fermeture selon la revendication 15, **caractérisée en ce que** la section de serrage (16) se rattache avec un coude à la section de réception (18) et/ou la section de fixation (12) se rattache avec un coude pour s'agripper dans le bec verseur (4a) à la section de serrage (16).

17. Fermeture selon au moins l'une quelconque des revendications précédentes, **caractérisée en ce que** l'élément de base (3) présente un élément à coquille (25) avec au moins un trou (26), de préférence 6 à 12 trous, qui est disposé côté récipient par rapport à l'ouverture (7) de l'élément de base (2) et qui s'écarte en s'incurvant de celui-ci, où le fluide peut être alimenté vers l'ouverture (7) au moyen dudit au moins un trou (26).

18. Fermeture selon la revendication 17, **caractérisée en ce que** l'élément à coquille (25) est assemblé dans sa zone de bord (27) avec la section de fixation (12).

19. Fermeture selon la revendication 17 ou 18, **caractérisée en ce que** l'élément de base (3) présente une section annulaire (29) avec des moyens d'étanchéité, en particulier des lamelles d'étanchéité (28), destinés à s'agripper dans le bec verseur (4a), pour fermer de manière étanche une fente (30) entre la section de fixation (12) et le bec verseur (4a), où la section annulaire (29) est de préférence réalisée en étant décalée vers l'intérieur par rapport à la section de fixation (12) et/ou est de préférence moulée sur l'élément à coquille (25).

20. Fermeture selon au moins l'une quelconque des revendications précédentes 15 à 19, **caractérisée en ce que** l'élément de base (3) présente un collier (34) qui se rattache à la section de réception (18), qui est pourvu d'au moins une came de fixation (35) pour un agrippement dans au moins un évidement (36) d'une bandelette de garantie (37) du deuxième élément de fermeture (6).

21. Fermeture selon au moins l'une quelconque des revendications précédentes 15 à 20, **caractérisée en ce que** l'élément de base (3) présente un collier (34) qui se rattache à la section de réception (18), qui est pourvu d'au moins une fenêtre d'encliquetage (38) pour un agrippement inamovible avec au moins un crochet d'encliquetage (39) du bec verseur (4a), en particulier avec un crochet d'encliquetage (39) de l'anneau de blocage (20) agencé sur le bec verseur (4a).

22. Fermeture selon au moins l'une quelconque des revendications précédentes, **caractérisée en ce que** le deuxième élément de fermeture (6) est calé par rapport à l'élément de base (3) en particulier au moyen d'un assemblage vissé (24, 48) dans l'état d'entreposage (III), où le deuxième élément de fermeture (6) presse le premier élément de fermeture (5), pour fixer celui-ci dans la position de fermeture (I), contre l'élément de base (3).

23. Fermeture selon au moins l'une quelconque des revendications précédentes, **caractérisée en ce que** le deuxième élément de fermeture (6) présente une section annulaire (49), en particulier avec un filet interne (48).

24. Fermeture selon la revendication 23, **caractérisée en ce que** le deuxième élément de fermeture (6) présente une bandelette de garantie (37) fixée sur la section annulaire (49).

25. Emballage (1a) pour un fluide, en particulier pour une composition de promoteur d'adhérence, présentant un récipient (2), qui présente une ouverture de déversement (4) et présentant une fermeture (1) selon au moins l'une quelconque des revendication 1 à 24, qui est agencée dans la zone de l'ouverture de déversement (4) pour une fermeture ou, selon le cas, une libération de celle-ci.

26. Unité de conditionnement (1b) constituée par un emballage (1a) selon la revendication 25 et un fluide (2a), en particulier une composition de promoteur d'adhérence (2a).

27. Unité de conditionnement selon la revendication 26, **caractérisée en ce que** la composition de promoteur d'adhérence présente au moins un promoteur d'adhérence, qui est choisi dans le groupe constitué par les composés organosiliciés, les composés organiques du titane, les composés organiques du zirconium, les polyisocyanates, les polymères présentant isocyanate et leurs mélanges.

28. Unité de conditionnement selon la revendication 26 ou 27, **caractérisée en ce que** la composition de promoteur d'adhérence présente au moins un composé organosilicié de formule (I) ou (II) ou (III) ou (IV) comme promoteur d'adhérence 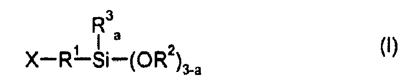 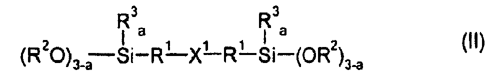 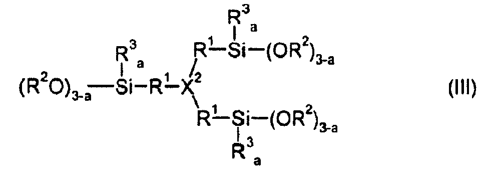 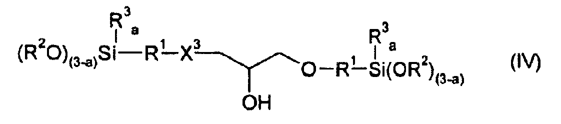 où
R¹ représente un groupe alkylène linéaire ou ramifié, le cas échéant cyclique comprenant 1 à 20 atomes de carbone, le cas échéant avec des fractions aromatiques et qui présente le cas échéant un ou plusieurs hétéroatomes, en particulier des atomes d'azote ;
R² représente H ou un groupe alkyle comprenant 1 à 5 atomes de carbone, en particulier méthyle ou éthyle, ou un groupe acyle, en particulier acétyle, de préférence méthyle ;
R³ représente un groupe alkyle comprenant 1 à 8 atomes de carbone, en particulier méthyle ;
X représente H ou un groupe fonctionnel, qui est choisi dans le groupe comprenant oxirane, OH, (méth)acryloxy, amine, SH, acylthio et vinyle, de préférence amine ;
X¹ représente un groupe fonctionnel qui est choisi dans le groupe comprenant NH, S, S₂ et S₄ ;
X² représente un groupe fonctionnel qui est choisi dans le groupe comprenant N et isocyanurate ;
X³ représente un groupe fonctionnel qui est choisi dans le groupe comprenant S et NR⁵, où R⁵ représente H, alkyle, cycloalkyle, aryle ou le radical de formule -Si(R³)ₐ(OR²)₍₃₋ₐ₎ ;
a représente une des valeurs 0, 1 ou 2, de préférence 0.

29. Unité de conditionnement selon la revendication 26 ou 27 ou 28, **caractérisée en ce que** la composition de promoteur d'adhérence présente au moins un composé organosilicié et au moins un composé organique du titane.

30. Unité de conditionnement selon l'une quelconque des revendications 26 à 29, **caractérisée en ce que** la composition de promoteur d'adhérence présente en outre un solvant, présentant en particulier un point d'ébullition ≤ 100°C à 1013 mbars.
